# EUROPÄISCHE PATENTANMELDUNG

(11) **EP 4 230 682 A1**
(43) Veröffentlichungstag der Anmeldung: **23.08.2023**
(21) Anmeldenummer: 22157592.1
(22) Anmeldetag: 18.02.2022
(51) Int. Cl.: C08J 5/04, C08J 5/18, B32B 23/00

(54) **PFLANZENFASER-VERBUNDMATERIAL**

(71) Anmelder: Salamander SPS GmbH & Co. KG, 86842 Türkheim (DE)
(72) Erfinder: SCHMIEDEKNECHT, Götz, 82166 Gräfelfing (DE)
(74) Vertreter: Schmid, Nils T.F.

(57) **Zusammenfassung**

Die vorliegende Erfindung betrifft ein Verbundmaterial, umfassend ein Fasermaterial und ein Bindemittel, wobei das Fasermaterial wenigstens teilweise aus Produktionsrückständen und/oder Sekundärrohstoffen gewonnen ist.

## Beschreibung

Die Erfindung betrifft ein Verbundmaterial umfassend ein Fasermaterial, das Pflanzenfasern aufweist, und ein Bindemittel, ein Erzeugnis, das das Verbundmaterial umfasst, sowie die Verwendung desselben und ein Verfahren zum Herstellen eines Verbundmaterials und des Erzeugnisses.

Ein Verbundmaterial auf der Basis von Fasermaterial und Bindemitteln ist beispielsweise aus WO2020 / 212062 bekannt. Darin wird als Fasermaterial Lederfasermaterial verwendet. Dieses wird mit Wasser und einem Bindemittel zu einem Faserbrei vermengt. Der Faserbrei wird anschließend auf einer Langsiebmaschine entwässert und in einem Trockenkanal getrocknet, wodurch aus dem Faserbrei ein flächiges Erzeugnis entsteht. Dieses kann beispielsweise zur Herstellung von Schuhkomponenten und zur Profilummantelung von Wandpaneelen eingesetzt werden. Das Lederfasermaterial kann dabei aus Lederprodukten wiedergewonnen werden, indem diese zunächst über eine Schneidmühle in 5 bis 10 mm² große Stücke zerkleinert und anschließend mit Wasser in einem Refiner zu einem Faserbrei vermahlen werden. Dieser Wiederverwertungsschritt trägt dazu bei, den ökologischen Fußabdruck von Lederprodukten zu reduzieren. Um den dabei wiedergewonnenen Lederfaserstoff für die Wiederverwertung in die jeweils gewünschte Form bringen zu können, wird in WO2021/212062 der Einsatz eines thermoplastischen Bindemittels empfohlen. Demnach sei es üblich ein Bindemittelgemisch einzusetzen, das einerseits weiche Bindemittel, wie Naturlatex und andererseits harte Bindemittel, wie Polyvinylester (Polyvinylacetat), umfasst. Diese Bindemittelgemische sollen jedoch zu einer hohen Thermoplastizitätstemperatur des Verbundmaterials führen, was den Energieaufwand für dessen Verarbeitung erhöht. Um dieses Problem zu lösen, schlägt WO2020/212062 vor, ein Bindemittel zu verwenden, das zu mindestens 90 Gew.-% ein Styrol-Acrylat-Copolymer aufweist.

Nachteilhaft an den bekannten Verbundwerkstoffen ist jedoch, dass diese auf Lederfasermaterial basieren. Zum einen kann die Wiederverwertung von Leder in Lederfaserstoffen den großen ökologischen Fußabdruck der Lederproduktion lediglich reduzieren, jedoch nicht eliminieren. Insbesondere die Tierzucht und die Gerbung von Leder erfordern einen hohen Einsatz von Nahrungsmitteln, Energie und Chemikalien. Selbst die Wiederverwertung des Leders in Lederfaserstoffen erfordert beim Einsatz von Styrol-Acrylat als Bindemittel den erneuten Einsatz von synthetischen Polymeren, deren Herstellung energieintensiv ist und das Produkt mit relativ kleinen Plastikpartikeln (nachfolgend als Mikroplastik bezeichnet), insbesondere mit einem Äquivalenzdurchmesser von weniger als 0,1 mm, kontaminieren. Besonders problematisch an Mikroplastik ist, dass dieses bei der Kompostierung von Lederfaserstoffen auf Grund der kleinen Partikelgröße nicht mit konventionellen Siebanlagen ausgesiebt werden kann und das Kompostmaterial somit nachhaltig kontaminiert.

Ein weiteres Problem besteht darin, dass die Herstellung von Leder aus Nachhaltigkeitsgründen und Tierschutzbemühungen immer kritischer gesehen wird, sodass fraglich ist, ob Lederprodukte in der Zukunft noch ausreichend für die Herstellung von Verbundmaterialien zur Verfügung stehen wird. WO 2020 / 212062 schlägt vor, dass neben Lederfasern auch synthetische Fasern und Pflanzenfasern eingesetzt werden können. Es besteht jedoch der Bedarf, nach noch nachhaltigeren Faseralternativen. Darüber hinaus besteht der Bedarf nach einer Lehre, wie nachhaltige Faseralternativen unter Bereitstellung gewünschter mechanischer Eigenschaften eingesetzt werden können.

Es ist daher Aufgabe der Erfindung, die Nachteile des Standes der Technik zu überwinden, insbesondere ein Verbundmaterial umfassend ein Fasermaterial und ein Bindemittel, ein Erzeugnis, das das Verbundmaterial umfasst, sowie die Verwendung desselben und ein Verfahren zum Herstellen eines Verbundmaterials und des Erzeugnisses bereitzustellen, dessen Fasermaterial und/oder Bindemittel langfristig zuverlässiger verfügbar und/oder ökologisch verträglicher ist, insbesondere wobei aus dem Verbundmaterial hergestellte flächige Erzeugnisse sich hinsichtlich Biegsamkeit zumindest teilweise an die Charakteristika von Verbundmaterialien mit Lederfasern annähern sollen.

Diese Aufgabe wird durch die unabhängigen Ansprüche gelöst. Bevorzugte Ausführungen sind in den abhängigen Ansprüchen angegeben.

Ein Verbundmaterial ist insbesondere ein Werkstoff aus zwei oder mehr verbundenen Materialien, der andere Werkstoffeigenschaften besitzt als seine einzelnen Komponenten. Für die Eigenschaften der Verbundwerkstoffe sind insbesondere stoffliche Eigenschaften und Geometrie der Komponenten von Bedeutung. Die Verbindung erfolgt insbesondere durch Stoff- oder Formschluss oder eine Kombination von beidem.

Das erfindungsgemäße Verbundmaterial umfasst ein Fasermaterial und ein Bindemittel. Insbesondere sind Fasermaterial und Bindemittel derart aufeinander abgestimmt, dass das Bindemittel in dem Verbundmaterial keine durchgängige Phase bildet, beispielsweise das Verbundmaterial ein bindemittelgebundener, d.h. etwa ein polymergebundener Vliesstoff ist. Dadurch kann insbesondere vermieden werden, dass das Verbundmaterial sich bei, insbesondere unbeabsichtigter, Erwärmung plastisch verformt. Insbesondere kann das Bindemittel eine Glasübergangstemperatur von weniger als 20°C aufweisen.

Vorzugsweise zeichnet sich das Verbundmaterial dadurch aus, dass es kein thermoplastisches Verhalten aufweist, also unter Wärmeeinfluss nicht (bzw. nicht wesentlich) plastisch verformbar ist (erweicht). Entsprechende Ausführungsformen werden nachfolgend als nicht-thermoplastisches Verbundmaterial bezeichnet. Vorzugsweise nimmt die Bruchdehnung des nicht-thermoplastischen Verbundmaterials insbesondere unter Wärmeeinfluss nicht zu sondern ab. Dies bedeutet insbesondere, dass thermoplastische Effekte für das nicht-thermoplastische Verbundmaterial auf makroskopische Ebene nicht beobachtet werden können. Dies kann insbesondere dadurch erreicht werden, dass das Bindemittel nicht in einer durchgängigen Phase vorhanden ist. Das Bindemittel liegt also nicht als eine im Wesentlichen monolithische Struktur (Matrix) vor, in der das Fasermaterial eingebettet ist. Vielmehr ist das Bindemittel in dem nicht-thermoplastischen Verbundmaterial in einer Vielzahl diskreter, d.h. räumlich voneinander getrennter Abschnitte vorhanden. Hierdurch wird insbesondere eine verbesserte Temperaturbeständigkeit des Verbundmaterials gegenüber bekannten, insbesondere thermoplastischen Verbundmaterialien erreicht.

Es kann etwa vorgesehen sein, dass das Verbundmaterial in der Form eines bindemittel(polymer)gebundenen Vliesstoffs vorliegt, in dem diskrete, voneinander getrennte Bindemittelmengen die Bindung der Fasern des Vliesstoffs zueinander verstärken. Eine solche Struktur zeichnet sich insbesondere durch sein nicht-thermoplastisches Verhalten und Betonung der Fasereigenschaften (Offenporigkeit, Feuchtigkeitsregulierung, gute Verklebbarkeit) aus.

Es kann vorgesehen sein, dass das Verbundmaterial eine geringe Gesamtemission nach VDA 277 oder VDA 278 aufweist. Insbesondere kann vorgesehen sein, dass das Verbundmaterial Gesamtemission von weniger als 250 µgC/g nach VDA 277 aufweist. Es kann ebenfalls vorgesehen sein, dass das Verbundmaterial Gesamtemission von weniger als 200 µg/g nach VDA 278 /oder einen Fog-Wert von < 1000 µg/g aufweist. Es kann vorgesehen sein, dass das Verbundmaterial eine Gesamtemission nach AgBB/DIN EN ISO 16000 von < 0,001 mg/m³ aufweist. Es kann vorgesehen sein, dass das Verbundmaterial eine TVOC 3d (total volatile organic compound; 3 Tage) Emission von < 10 mg/m³ aufweist. Die angegebenen Normen VDA 277, VDA 278, DIN EN ISO 16000, AgBB und TVOC 3d beziehen sich jeweils auf die zum Anmeldetag (Prioritätstag) gültige Fassung.

Die Gesamtemission und/oder die TVOC-Emission des Verbundmaterials können entweder durch die Auswahl geeigneter Bestandteile, insbesondere eines geeigneten Bindemittels, etwa durch ein geeignetes Herstellungsverfahren desselben, und geeigneter Additive, erreicht werden. Es kann etwa vorgesehen sein, dass zum Zweck der Emissionsreduktion ein Bindemittel mit einem geringen Anteil an Restmonomer(en) und/oder anderen Emittenten verwendet wird.

Alternativ kann die Gesamtemission und/oder die TVOC-Emission des Verbundmaterials gemäß den obigen Ausführungsformen dadurch erreicht werden, dass entweder das Verbundmaterial oder ein oder mehrere Materialien, die zur Herstellung des Verbundmaterials verwendet werden, einer chemischen oder physikalischen Reinigungs- und Desodorierungsprozedur unterworfen wurden. Geeignete chemische oder physikalische Reinigungs- und Desodorierungsprozeduren sind etwa eine Nachpolymerisation, ein Steam-Stripping- oder Gas-stripping-Schritt oder eine Membranfiltration oder Kombinationen daraus. Ein entsprechendes Verfahren ist etwa aus der EP 0 967 232 A1 bekannt.

Es wurde erkannt, dass mit dem bindemittel(polymer)gebundenen Vliesstoff, insbesondere im Vergleich zu einem Verbundmaterial mit durchgängiger Phase, gewünschte mechanische Eigenschaften, insbesondere hinsichtlich Elastizität, Biegesteifigkeit, Luftdurchlässigkeit und Wasserdampfspeicherfähigkeit, bereitgestellt werden können, was insbesondere für den Einsatz des Verbundmaterials bei den weiter unten beschriebenen Einsatzgebieten von Vorteil ist.

Vorzugsweise beträgt der Anteil des Fasermaterials, bezogen auf das Gesamtgewicht des Verbundmaterials, wenigstens 20 Gew.-%, 30 Gew.-%, 40 Gew.-%, 50 Gew.-% oder 60 Gew.-% und/oder höchstens 95 Gew.-%, 90 Gew.-%, 80 Gew.-% oder 70 Gew.-%. Insbesondere beträgt der Anteil des Fasermaterials, bezogen auf das Gesamtgewicht des Verbundmaterials, 20 bis 80 Gew.-%, vorzugsweise 25 bis 70 Gew.-%, besonders bevorzugt 30 bis 60 Gew.-%, 30 bis 50 Gew.-% oder 60 bis 70 Gew.-%.

Ferner beträgt der Anteil des Bindemittels, bezogen auf das Gesamtgewicht des Verbundmaterials, vorzugsweise wenigstens 3 Gew.-%, 5 Gew.-%, 10 Gew.-%, 15 Gew.-%, 20 Gew.-% oder 25 Gew.-% und/oder höchstens 60 Gew.-%, 50 Gew.-%, 40 Gew.-%, 35 Gew.-% oder 30 Gew.-%. Insbesondere beträgt der Anteil des Bindemittels, bezogen auf das Gesamtgewicht des Verbundmaterials, 5 bis 60 Gew.-%, vorzugsweise 10 bis 50 Gew.-%, besonders bevorzugt 20 bis 35 Gew-%. Insbesondere die Untergrenze von 20 Gew.-% hat sich als vorteilhaft erwiesen, um dem Verbundmaterial für die nachfolgend beschriebenen Einsatzgebiete die erforderlichen mechanische Eigenschaften, wie Flexibilität, zu verleihen. Ein Überschreiten der Obergrenze von 60 Gew.-% kann insbesondere dazu führen, dass das Bindemittel nicht mehr vollständig in dem Fasermaterial gebunden wird, was zu Produktionsproblemen führen kann. Ferner kann ein Überschreiten der Obergrenze von 35 Gew.-%, insbesondere 50 Gew.-%, den für das Fasermaterial verfügbaren Anteil derart reduzieren, dass das Verbundmaterial eine zu geringe Festigkeit für die nachfolgend beschriebenen Einsatzgebiete aufweist.

Als bevorzugtes Gewichtsverhältnis von Fasermaterial zu Bindemittel hat sich ein Verhältnis zwischen1/1 und 3/1, besonders bevorzugt zwischen 1,5/1 und 2,5/1 oder zwischen 1,7/1 und 2,2/1, beispielsweise von 2/1, herausgestellt.

Unter Fasermaterial ist insbesondere ein Material zu verstehen, dass eine Vielzahl von Fasern aufweist. Vorzugsweise umfasst Fasermaterial im Sinne der vorliegenden Erfindung, bezogen auf das Gesamtgewicht des Fasermaterials, einen Faseranteil von wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-%. Das Fasermaterial kann insbesondere eine Vielzahl von miteinander verzweigten Fasern aufweisen. Unter einer Faser ist insbesondere ein lineares Gebilde, insbesondere mit einer Längsform, zu verstehen. Insbesondere ist unter einer Faser ein Gebilde zu verstehen, dessen Längserstreckung deutlich größer ist, insbesondere wenigstens 3-mal, 5-mal, 10-mal, 20-mal oder 50-mal so groß, wie dessen Radialerstreckung, insbesondere Durchmesser. Unter der Längserstreckung ist insbesondere die Länge einer Faser im gestrecktem (geradlinigen) Zustand zu verstehen. Vorzugsweise weist eine Faser im Sinne der vorliegenden Erfindung eine Längserstreckung von mindestens 0,02 mm, 0,03 mm, 0,05 mm, 0,1 mm, 0,2 mm, 0,3 mm, 0,4 mm oder 0,5 mm auf. Unter einer Faserform ist insbesondere keine Pulverform zu verstehen und umgekehrt. Im Gegensatz zu einer Faserform zeichnet sich eine Pulverform insbesondere durch ein nicht lineares oder längsförmiges Gebilde, insbesondere durch ein räumliches, insbesondere kugel- oder klumpenförmiges Gebilde aus. Insbesondere zeichnet sich eine Pulverform durch eine im Wesentlichen gleiche Erstreckung in zumindest zwei, vorzugsweise drei, zueinander orthogonale Richtungen aus. Unter im Wesentlich gleich ist insbesondere eine Abweichung von maximal dem 2.5-fachen, 2-fachen, 1.5-fachen oder dem 1-fachen der kleinsten Erstreckung in eine der Richtungen zu verstehen. Insbesondere ist unter einer Pulverform eine Form zu verstehen, dessen größte Erstreckung kleiner ist als 0,02 mm, 0,03 mm, 0,05 mm, 0,1 mm, 0,2 mm, 0,3 mm, 0,4 mm oder 0,5 mm.

Vorzugsweise umfasst das Fasermaterial organisches Fasermaterial. Unter organischem Fasermaterial (Naturfasermaterial oder Naturfasern) ist insbesondere sowohl natürlich gewonnenes als auch natürlich gewinnbares Fasermaterial zu verstehen, wobei auch synthetisch hergestellte Fasern umfasst sind, solange diese auf organischer Basis (natürliche Materialien) beruhen. Das heißt insbesondere Fasermaterial kann bereits in der Natur in faserförmigen Zustand vorkommen (natürlich gewonnen) und/oder es kann durch einen Behandlungsschritt in eine faserige Struktur überführt werden (natürlich gewinnbar). Unter den organischen Materialien sind insbesondere sowohl pflanzliche Fasermaterialien (Pflanzenfasermaterial) als auch tierische Fasermaterialien, wie Lederfasermaterialien, Wollfasermaterialien und Seidenfasermaterialien, geeignet.

Vorzugsweise umfasst wenigstens 10 Gew.-%, 20 Gew.-%, 30 Gew.-%, 40 Gew.-%, 50 Gew.-%, 60 Gew.-%, 70 Gew.-%. 80 Gew.-%, 90 Gew.-%, 95 Gew.-%, 99 Gew.-% oder 100 Gew.-% des Fasermaterials, bezogen auf das Gesamtgewicht des Fasermaterials natürlich gewonnenes Fasermaterial. Insbesondere durch den Einsatz von natürlich gewonnenem Fasermaterial fällt der energieaufwendige Behandlungsschritt zur Herstellung der faserigen Struktur wenigstens teilweise weg, was die ökologische Verträglichkeit des Verbundmaterials steigert.

Erfindungsgemäß umfasst das Fasermaterial Pflanzenfasermaterial. Nachfolgend werden unterschiedliche Aspekte der Erfindung beschrieben, bei denen der Anteil des Pflanzenfasermaterials und/oder die Art des Pflanzenfasermaterials variieren kann. Dabei basieren sämtliche Aspekte auf dem gemeinsamen erfinderischen Konzept, die Nachhaltigkeit und Verfügbarkeit des Verbundmaterials durch Einsatz von anderweitig nicht, nur teilweise oder nur für minderwertige Zwecke wiederverwertbarem Fasermaterial zu erhöhen und das Verbundmaterial so auszubilden, dass es sich hinsichtlich Biegsamkeit und Wasserdampfaufnahmefähigkeit an die Eigenschaften von klassischen Lederfaserstoffen annähert. Soweit durch die jeweiligen Aspekte der Erfindung nicht ausgeschlossen, beträgt der Anteil des Pflanzenfasermaterials wenigstens 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Fasermaterials. Dadurch kann der hohe Ressourcenverbrauch, der mit der Züchtung von Tieren und mit der Verarbeitung des dadurch gewonnenen Fasermaterials einhergeht, zumindest teilweise reduziert werden, was die ökologische Verträglichkeit des Verbundmaterials steigert. Des Weiteren umfasst, soweit durch die jeweiligen Aspekte der Erfindung nicht ausgeschlossen, das Pflanzenfasermaterial Samenfasermaterial, insbesondere Baumwolle und/oder Kapok, Bastfasermaterial, insbesondere Hanf, Flachs, Jute, Sunn, Kenaf, Urena, Rosella, Ramie und/oder Nessel, Hartfasermaterial insbesondere Sisal, Hennequen, Abaka, Fique, Ananas und/oder Banane, und/oder Fruchtfasermaterial, insbesondere Kokos, oder Mischungen von zwei oder mehr davon, insbesondere zu einem Anteil von 10 Gew.-%, 20 Gew.-%, 30 Gew.-%, 40 Gew.-%, 50 Gew.-%, 70 Gew.-%. 80 Gew.-%, 90 Gew.-%, 95 Gew.-%, 99 Gew.-% oder 100 Gew.-%, bezogen auf das Gesamtgewicht des Pflanzenfasermaterials. Besonders bevorzugt umfasst das Pflanzenfasermaterial, soweit durch die jeweiligen Aspekte der Erfindung nicht ausgeschlossen, aus Produktionsrückständen und/oder Sekundärrohstoffen gewonnenes Fasermaterial, Baumwollfasermaterial, Papierfasermaterial, Holzfasermaterial, Fasermaterial der Ordnung Poales oder Mischungen von zwei oder mehr davon umfasst, insbesondere besteht daraus.

Gemäß einem Aspekt der Erfindung weist das Bindemittel einen biologisch abbaubaren Anteil von wenigstens 20 Gew.-%, bezogen auf das Gesamtgewicht des Bindemittels, auf. Vorzugsweise beträgt der biologisch abbaubare Anteil des Bindemittels wenigstens 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% bezogen auf das Gesamtgewicht des Bindemittels. Ein solches Verbundmaterial weist eine hohe ökologische Verträglichkeit auf, die für die folgenden Ausführungsformen besonders stark ausgeprägt ist. Überraschenderweise hat sich herausgestellt, dass es bei dem Einsatz des Verbundmaterials entgegen der Auffassung aus dem Stand der Technik nicht immer auf die thermoplastische Verformbarkeit ankommt, diese wie zuvor beschrieben sogar nachteilig sein kann, sodass auf die aus dem Stand der Technik bekannten Styrol-Aciylate im Bindemittel verzichtet werden kann. Insbesondere beim Einsatz des Verbundmaterials für die folgenden beschriebenen Anwendungsgebiete kommt es nicht auf die thermoplastische Verformbarkeit des Verbundmaterials an. Es wurde überraschenderweise festgestellt, dass, insbesondere bei diesen Anwendungsgebieten, ein hoher Anteil an biologisch abbaubaren Bindemitteln eingesetzt werden kann, ohne für die entsprechenden Anwendungsgebiete maßgebliche mechanische Eigenschaften des Verbundmaterials, insbesondere hinsichtlich Biegsamkeit und Wasserdampfspeicherfähigkeit, zu verlieren. Dadurch kann die biologische Abbaubarkeit und somit auch die Nachhaltigkeit des gesamten Verbundmaterials deutlich erhöht werden. Überraschenderweise wurde festgestellt, dass sogar Verbundmaterialien genutzt werden können, deren Fasermaterial zu 100% aus Pflanzenfasermaterial und deren Bindemittel zu 100% aus biologisch abbaubaren Bindemitteln bestehen, was zu vollständig biologisch abbaubaren Verbundwerkstoffen führen kann.

Unter biologisch abbaubar im Sinne der vorliegenden Erfindung sind insbesondere Bindemittel zu verstehen, welche die Anforderungen der Norm ASTM-D6400-19, insbesondere die in deren Abschnitten 5 und 6 definierten Tests erfüllen. Demnach kann die Formulierung "biologisch abbaubar" alternativ auch als "kompostierbar gemäß ASTM-D6400-19" bezeichnet werden.

Vorzugsweise umfasst der biologisch abbaubare Anteil zumindest ein Polymer, wobei das Polymer ausgewählt ist aus der Gruppe bestehend aus Polyester, insbesondere aliphatischer Polyester, Polyamid, Polyacetal, Polyvinylalkohol, Polylactid, Polyurethan, Kautschuk, insbesondere Naturkautschuk, Polyvinylester, insbesondere Polyvinylacetat, Polybutadien, Zellulose und deren Derivate, Stärke und deren Derivate, einem Copolymer von zwei oder mehreren davon und einem Gemisch von zwei oder mehreren davon. Besonders bevorzugt ist das Polymer ausgewählt aus der Gruppe, bestehend aus Naturkautschuk, Polyurethan, Polyvinylester, Polybutadien, einem Copolymer von zwei oder mehreren davon und einem Gemisch von zwei oder mehreren davon. Die zuvor genannten Bindemittel haben sich als besonders geeignet zur Bereitstellung eines biologisch abbaubaren Verbundmaterials herausgestellt. Demnach kann dieser Aspekt der Erfindung alternativ zur Formulierung "biologisch abbaubar" auch durch Auflistung einer oder mehrerer der zuvor genannten Bindemittel formuliert werden. Besonders vorteilhaft an Polyurethan und/oder Polyactid als Bindemittel ist, dass diese zu einem hohen Anteil, insbesondere von wenigstens 80 Gew.-% bezogen auf das Gesamtgewicht des Bindemittels, von nachwachsenden Ressourcen gewinnbar sind.

Als besonders bevorzugt hat es sich herausgestellt, für den biologisch abbaubaren Anteil des Bindemittels ein biogenes Polymer zu verwenden. Besonders vorteilhaft an dem Einsatz von biogenen Bindemitteln ist, dass diese frei von chemischen Syntheseverfahren gewonnen werden können und somit bereits in ihrer Herstellung zur Umweltverträglichkeit des späteren Verbundmaterials beitragen. Demnach kann der "biologisch abbaubare Anteil" gemäß diesem Aspekt der Erfindung alternativ oder zusätzlich auch als "biogener Anteil" bezeichnet werden. Als besonders bevorzugt hat sich die Auswahl eines biogenen Polymers aus der Gruppe bestehend aus Kautschuk, insbesondere Naturkautschuk, Zellulose und deren Derivate, Stärke und deren Derivate, einem Copolymer von zwei oder mehreren davon und einem Gemisch von zwei oder mehreren davon, herausgestellt.

Es hat sich herausgestellt, dass insbesondere der Einsatz von synthetischen Bindemitteln, insbesondere von Styrol-Acrylat als Bindemittel, die biologische Abbaubarkeit des Verbundmaterials deutlich beeinträchtigt. Insbesondere liegen synthetische Bindemittel, insbesondere Styrol-Acrylat, in der Regel in feinverteilter Form im Verbundmaterial und nach der Zersetzung in Form von relativ kleinen Plastikpartikeln (Mikroplastik), insbesondere mit einem Äquivalenzdurchmesser von weniger als 0,1 mm, vor, die auf Grund der kleinen Partikelgröße nicht mit konventionellen Kompost-Siebanlagen ausgesiebt werden können und das Material somit nachhaltig kontaminieren. Insofern wurde festgestellt, dass bereits die Reduzierung des Styrol-Acrylat-Anteils gegenüber dem Stand der Technik zu einer Erhöhung der biologischen Abbaubarkeit des Verbundmaterials führt. Insofern kann die auf den "biologisch abbaubaren Anteil" des Bindemittels gerichtete Ausführungsform der Erfindung alternativ oder zusätzlich auch als "Styrol- und/oder Acrylat-freier Anteil" bezeichnet werden.

Alternativ oder zusätzlich zum biologisch abbaubaren Anteil des Bindemittels kann vorgesehen sein, dass das Bindemittel ein Polymer ist, das mindestens 50 Gew.-%, 60 Gew.-%. 70 Gew.-%, 80 Gew.-%, 90 Gew.-%, 95 Gew.-% oder 99Gew.-% eines ethylenisch ungesättigten Monomers mit zumindest einer Carbonsäureestergruppe enthält. Es kann vorgesehen sein, dass das Bindemittel ein Polymer ist, das aus einem ethylenisch ungesättigten Monomer besteht.

Es kann vorgesehen sein, dass das Bindemittel ein Polyalkylacrylat, ein Polyalkyl(meth)acrylat, ein Polyurethan, ein Vinylacetat oder Copolymere oder Mischungen von aus zwei oder mehr davon ist. Es kann vorgesehen sein, dass das Bindemittel ein Polyalkylacrylat, ein Polyurethan oder Copolymere oder ein Gemisch aus zwei oder mehr davon ist. Es kann vorgesehen sein, dass das Bindemittel ein Polyalkylacrylat, insbesondere ein unvernetztes Polyalkylacrylat, ist.

Es kann vorgesehen sein, dass das Polyurethan ein Polyesterpolyurethan, insbesondere ein anionisches und/oder aliphatisches Polyesterpolyurethan, ein Polyetherpolyurethan oder ein Gemisch aus zwei oder mehreren davon ist. Es kann vorgesehen sein, dass das Bindemittel ein Copolymer eines Polyesterpolyurethans und eines Polyalkylacrylat, ein Copolymer eines Polyetherpolyurethans und eines Polyalkylacrylats, ein Copolymer eines Polyesterpolyurethans, eines Polyetherpolyurethans und eines Polyalkylacrylats, oder ein Gemisch aus zwei oder mehr davon ist.

Es kann vorgesehen sein, dass das Bindemittel Poly-Ci bis C₁₂-Alkylacrylat ist. Es kann vorgesehen sein, dass das Bindemittel Poly-Ci bis C₁₀-Alkylacrylat ist. Es kann vorgesehen sein, dass das Bindemittel Poly-Ci bis C₈-Alkylacrylat ist. Es kann vorgesehen sein, dass das Bindemittel Poly-C₂ bis C₆-Alkylacrylat ist. Es kann vorgesehen sein, dass das Bindemittel Poly-C₃ bis C₅-Alkylacrylat ist. Es kann vorgesehen sein, dass das Bindemittel Poly-C₄ -Alkylacrylat (Polybutylacrylat) ist. Es kann vorgesehen sein, dass das Polybutylacrylat eine Glasübergangstemperatur Tg von - 50°C bis -5°C, vorzugsweise von -40°C bis -20°C, hat.

Es kann vorgesehen sein, dass das Bindemittel Methacrylat, Ethylacrylat, n-Butylacrylat, Isobutylacrylat, tert.-Butylacrylat, Hexylacrylat, 2-Ethylhexylacrylat und/oder Laurylacrylat enthält oder aus einem oder mehrerer derselben besteht.

Es kann vorgesehen sein, dass das Bindemittel ein anionisches Polyalkylacrylat umfasst oder aus diesem besteht, wobei das Polyalkylacrylat wie oben definiert ausgewählt sein kann, insbesondere das Bindemittel ein anionisches Polybutylacrylat umfasst oder ist.

Es kann vorgesehen sein, dass das Bindemittel eine Glasübergangstemperatur (Tg) ausgewählt aus der Gruppe, bestehend aus weniger als 0°C, weniger als -5 °C, weniger als -10 °C, weniger als -15 °C, weniger als -20 °C, weniger als -25 °C, weniger als -28 °C, von -40 °C bis -20 °C, von -35 °C bis -25 °C, von -32 °C bis -28 °C, beispielsweise etwa -30 °C, jeweils bestimmt durch Dynamische Differenzkalorimetrie (DSC), hat.

Es kann vorgesehen sein, dass das Bindemittel eine Viskosität von höchstens 200 mPa^{∗}s, beispielsweise von 20 bis 200 mPa^{∗}s nach ISO 1652, Brookfield RVT Spindel 1/Umin 10/Faktor 5 hat.

Es kann vorgesehen sein, dass das Bindemittel ein spezifisches Gewicht von 1.00 bis 1.10 bei 25 °C, insbesondere 1.02 bis 1.06 bei 15 °C, beispielsweise etwa 1.04 °C hat.

Durch die im vorangehenden aufgeführten Bindemittel kann eine besonders vorteilhafte Formstabilität erreicht werden. Insbesondere kann gegenüber alternativen Bindemitteln, insbesondere gegenüber Styrol-Acrylat-basierten Bindemitteln, die Formstabilität des Verbundmaterials bei höheren Temperaturen verbessert werden.

Es sei klar, dass bei jedem der nachfolgend beschriebenen Aspekte der Erfindung das Bindemittel aus einem oder mehreren der zuvor beschriebenen Polymere ausgewählt werden kann und in den zuvor beschriebenen Anteilen bezogen auf das Gesamtgewicht des Bindemittels, vorliegen kann.

Es kann vorgesehen sein, dass das Verbundmaterial ferner zumindest ein Additiv umfasst. Es kann vorgesehen sein, dass das Additiv in einer Menge von mindestens 1 Gew.-%, 2 Gew.-%, 5 Gew.-%, 10 Gew.-% 15 Gew.-% 20 Gew.-% 23 Gew.-% oder 25 Gew.-% und/oder von höchstens 35 Gew.-% 30 Gew.-%, 28 Gew.-%, 25 Gew.-%, 23 Gew.-% oder 20 Gew.-%, bezogen auf das Gesamtgewicht des Verbundmaterials, umfasst ist. Insbesondere kann das Additiv in einer Menge zwischen 5 Gew.-% und 35 Gew.-%, vorzugsweise zwischen 10 Gew.-% und 30 Gew.-%, besonders bevorzugt zwischen 13 Gew.-% und 25 Gew.-%, bezogen auf das Gesamtgewicht des Verbundmaterials, umfasst sein.

Das Additiv kann ausgewählt sein aus einem anorganischen Salz, einem Konservierungsmittel, einem Farbmittel, einem Gleitmittel, einem Weichmacher, Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff oder Mischungen von zwei oder mehr davon.

Insbesondere kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 2:1 bis 10:1; 3:1 bis 8:1; 4:1 bis 7:1; 5:1 bis 6:1; insbesondere etwa 5,5:1.

Alternativ oder zusätzlich kann vorgesehen sein, dass das Verbundmaterial zumindest ein Additiv umfasst, das ausgewählt ist aus der Gruppe, bestehend aus einem Fettungsmittel, insbesondere einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 3:1 bis 20:1; 5:1 bis 15:1; 8:1 bis 13:1; 9:1 bis 11:1; insbesondere etwa 10:1.

Es kann vorgesehen sein, dass der Gerbstoff ein vegetabiler Gerbstoff, etwa ein als (Nach-) Gerbstoff-geeignetes Pflanzenextrakt ist, beispielsweise ein Quebracho-Extrakt, ist. Es kann hierbei vorgesehen sein, dass das Gewichtsverhältnis von Fasermaterial zu Gerbstoff eines ist, das aus der Gruppe ausgewählt ist, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass ein Gemisch von Additiven in dem Verbundmaterial umfasst ist, wobei das Gemisch von Additiven einen Gerbstoff, ein Fettungsmittel und/oder ein anorganisches Salz umfasst, etwa in einer Menge von zumindest 90 Gew.-%, bezogen auf das Gesamtgewicht des Gemischs von Additiven, umfasst, vorzugsweise (im Wesentlichen) aus diesen besteht. Ferner hat sich herausgestellt, dass insbesondere der Einsatz von Elastomeren in dem Bindemittel von Vorteil ist. Besonders bevorzugt umfasst, insbesondere besteht, das Bindemittel daher aus einem Elastomer, insbesondere aus Kautschuk, insbesondere Naturkautschuk. Durch den Einsatz von Elastomeren kann dem Verbundmaterial insbesondere ein elastisches Verhalten verliehen werden. Dies ist insbesondere bei Ausführungsformen, wie Hinterkappen und Taschen von Vorteil, bei denen gewünscht ist, dass Sie nach einer Verformung wieder in den ursprünglichen Zustand zurückkehren. Das Maß an Elastizität, das bei derartigen Anwendungen gefordert wird kann insbesondere als sprungelastisch bezeichnet werden. Bei dem Einsatz des Verbundmaterials für Beschichtungen kann eine zu hohe Elastizität jedoch zu Problemen bei dem Verarbeiten des Verbundmaterials an scharfen Kanten führen. An diesen kann ein zu elastisches Verbundmaterial zurückspringen, sodass kein enger Verlauf des Verbundmaterials entlang der Kante gewährleistet werden kann. Es wurde erkannt, dass dieses Problem durch die Zugabe eines Weichmachers, d.h. durch die Verwendung eines Weichmachers als Additiv, gelöst werden kann. Vorzugsweise wird als Weichmacher ein Fettungsmittel, insbesondere in Art und/oder Menge wie zuvor beschrieben, eingesetzt.

Insbesondere beim Einsatz des Verbundmaterials für Beschichtungen, wie Ummantelungen, Kaschierungen und/oder Belägen, wurde es als vorteilhaft erkannt, einen Weichmacher einzusetzen. Dadurch kann ein knetartiges Verformungsverhalten bereitgestellt werden, wodurch das Verbundmaterial eng entlang von scharfen Kanten verlaufen kann. Ein derartiges elastisches Verhalten kann insbesondere als elastoplastisch bezeichnet werden. Dadurch können weitere Einsatzgebiete des Verbundmaterials erschlossen werden.

Als Farbmittel kann beispielsweise ein schwarzes Farbmittel, etwa eine Rußpigmentdispersion, oder ein Farbstoff, beispielsweise ein gelber oder ein oranger Farbstoff, vorgesehen sein.

Als Flammschutzmittel kann beispielsweise Blähgraphit, roter Phosphor, Aluminiumhydroxid oder Mischungen von zwei oder mehr davon vorgesehen sein.

Insbesondere dann, wenn das Fasermaterial Holzfasermaterial und/oder Papierfasermaterial umfasst oder aus diesen besteht kann vorgesehen sein, dass das Verbundmaterial zumindest ein Additiv umfasst, das ausgewählt ist aus der Gruppe, bestehend aus einem Flockungsmittel, einem Fixiermittel, einem Entwässerungshilfsmittel, einem Nassfestmittel und einem Füllstoff.

Ein Aspekt der Erfindung betrifft ein Verbundmaterial umfassend ein Fasermaterial, das Pflanzenmaterial aufweist, und ein Bindemittel, wobei das Pflanzenfasermaterial Pflanzenfasermaterial der Ordnung Poales umfasst. Das Verbundmaterial kann wie zuvor beschrieben ausgebildet sein. Dabei kann das Bindemittel gemäß den zu beschriebenen Ausführungen einen biologisch abbaubaren Anteil aufweisen oder auch nicht. Wesentlich bei diesem Erfindungsaspekt ist lediglich, dass das Pflanzenfasermaterial Pflanzenfasermaterial der Ordnung Poales umfasst.

Vorzugsweise umfasst das Pflanzenfasermaterial der Ordnung der Poales Pflanzenfasermaterial der Familie der Poaceae, insbesondere besteht daraus. Besonders bevorzugt umfasst das Pflanzenfasermaterial der Ordnung der Poales Pflanzenfasermaterial der Unterfamilien der Pooideae, der Orzyoideae, der Panicoideae, der Antropogonoideae oder Mischungen von zwei oder mehr davon, insbesondere besteht daraus. Insbesondere umfasst das Pflanzenfasermaterial der Poales Pflanzenfasermaterial des Stammes der Triticeae, Aveneae, Orzyzeae, Pariceae, Zeeae oder Mischungen von zwei oder mehr davon, insbesondere besteht daraus. Besonders bevorzugt umfasst das Pflanzenfasermaterial der Ordnung der Poales Pflanzenfasermaterial der Gattung von Weizen, Dinkel, Roggen, Gerste, Hafer, Reis, Hirse, Mais oder Mischungen von zwei oder mehr davon, insbesondere besteht daraus.

Die Erfinder haben erkannt, dass die zuvor beschriebenen Pflanzenfasermaterialien der Ordnung der Poales für gattungsgemäße Verbundmaterialien eingesetzt werden können. Insbesondere im Zusammenspiel mit den zuvor beschriebenen Mengenanteilen von Bindemittel und Pflanzenfasermaterial hat sich herausgestellt, dass entsprechende Verbundmaterialien für die weiter unten beschriebenen Zwecke eingesetzt werden können. Ein Vorteil dieses Aspekts der Erfindung besteht darin, dass diese Pflanzenfasermaterialien nahezu weltweit bei der Nahrungsmittelherstellung gewonnen werden und diese somit lokal hergestellt und verarbeitet werden können, wodurch emissionsverursachende Transporte vermieden werden. Darüber hinaus ist durch die hohe Bedeutung dieser Pflanzenfasermaterialien in der Nahrungsmittelherstellung damit zu rechnen, dass dieses Fasermaterial langfristig zur Verfügung stehen wird. Ein weiterer Vorteil besteht darin, dass große Teile von derartigem Pflanzenfasermaterial als Rückstände bei der Nahrungsmittelherstellung anfallen, sodass deren Verwendung in gattungsgemäßen Verbundmaterialien den Ausnutzungsgrad der Lebensmittelherstellung erhöht und diese somit noch nachhaltiger macht.

Besonders bevorzugt umfasst das Pflanzenfasermaterial der Gattung Poales Pflanzenfasermaterial aus Spreu, insbesondere Getreidespreu. Als Spreu, insbesondere Getreidespreu, werden vorzugsweise die beim Dreschen von Getreide, wie Weizen, Dinkel, Roggen, Gerste, Hafer, Reis, Hirse und/oder Mais, abfallenden Bestandteile der jeweiligen Getreidepflanze bezeichnet. Vorzugsweise umfasst das Spreu die Spelze, welche die Blüte schützend umgibt, die Hülse, Granne, Samenhülle und/oder Stängelteile, wobei auch Bestandteile der Frucht bzw. des Samens bzw. der Blüte vorhanden sein können. Unter Getreide im Sinne der vorliegenden Erfindung seien insbesondere sämtliche unter die Gattung der Poales fallenden Pflanzenfasermaterialien zu verstehen. Besonders bevorzugt weist das Pflanzenfasermaterial Spelzfasermaterial auf. Unter Spelzfasermaterial ist insbesondere aus Spelze gewonnenes Fasermaterial zu verstehen.

Vorzugsweise beträgt der Anteil des Pflanzenfasermaterials, insbesondere Spelzfasermaterial, das aus Spreu, insbesondere Getreidespreu, gewonnen wird, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials der Ordnung Poales. Zusätzlich oder alternativ beträgt vorzugsweise der Anteil des Pflanzenfasermaterials der Ordnung Poales wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials.

Ein weiterer Vorteil in dem Einsatz vom Pflanzenfasermaterial, das aus Spreu, insbesondere Getreidespreu, gewonnen wird, besteht darin, dass die Herkunft aus Spreu dem Verbundmaterial anzusehen ist, was dem Verbundmaterial ein auf vegane Bestandteile hinweisendes Aussehen (veganes Aussehen/veganer Eindruck) verleiht. Dadurch kann beispielsweise beim Einsatz des Verbundmaterials für Wandbekleidung in Verkaufsräumen die Sympathie des Kunden für den Verkäufer gesteigert werden. Außerdem kann beispielsweise bei der Verkleidung von Gegenständen das dadurch erzielte vegane Aussehen einen Kaufanreiz darstellen.

Ein weiterer Aspekt der Erfindung betrifft ebenfalls ein Verbundmaterial umfassend ein Fasermaterial, das Pflanzenfasermaterial aufweist, und ein Bindemittel, wobei das Pflanzenfasermaterial aus Sekundärrohstoffen und/oder aus Produktionsrückständen gewonnen ist. Derartiges Pflanzenfasermaterial wird zur vereinfachten Lesbarkeit folgend als rezykliertes Pflanzenfasermaterial bezeichnet. Das Verbundmaterial gemäß diesem Aspekt der Erfindung kann wie die zuvor beschriebenen Verbundmaterialien ausgestaltet sein, wobei das Bindemittel einen biologisch abbaubaren Anteil aufweisen kann oder nicht und/oder das Fasermaterial alternativ oder zusätzlich zu dem rezyklierten Pflanzenfasermaterial Pflanzenfasermaterial der Ordnung der Poales umfassen kann oder nicht. Insbesondere können Produktionsrückstände in Form von Spelze verwendet werden.

Unter Produktionsrückständen sind insbesondere Rückstände zu verstehen, die bei der Verarbeitung von Fasermaterial anfallen. Als Beispiele seien insbesondere Schneid- und Stanzrückstände, beispielsweise bei der Verarbeitung von Stoffen und Papier, Rückstände aus der Baumwollverarbeitung, insbesondere Kämmlinge, Grundbaumwolle, Kardenabfälle, Schlichtfäden und Reißfasermaterial, aber auch Rückstände aus der Lebensmittelverarbeitung, wie Spelze, zu verstehen.

Unter Sekundärrohstoff ist insbesondere aus Produkten, wie Papierbechern und Textilen, wiedergewonnenes Material zu verstehen.

Rezykliertes Pflanzenfasermaterial zeichnen sich insbesondere durch eine gegenüber Frischfasermaterial kürzere Faserlänge sowie eine geschwächte, insbesondere ausgefranste, Struktur auf. Ausgefranste Fasern erkennt der Fachmann unter dem Mikroskop. Als Beispiel für eine Methode zum Erkennen von ausgefransten Fasern wird auf die Studie "Wie entstehen ausgefranste Fasern während des Veredelungsprozesses - Identifizierung von ausgefransten Fasern unter einem hochauflösenden Mikroskop" (ISBN-13: 9786202742887) verwiesen, deren diesbezüglicher Inhalt hiermit in den Offenbarungsgehalt dieser Anmeldung einbezogen wird.

In der Textilindustrie werden große Mengen von Fasern verarbeitet. Dabei entstehen an einigen Stellen der Wertschöpfungskette Produktionsrückstände. Beispielsweise bleiben beim Auskämmen von abstehenden Fasern aus Garnen die ausgekämmten Fasern als Produktionsrückstände zurück. Diese Fasern werden als Kämmlinge bezeichnet. Insbesondere durch das Auskämmen erhalten die Fasern eine ausgefranste Struktur. Da Kämmlinge in der Regel eine relativ geringe Faserlänge aufweisen und durch den Auskämmprozess stark mechanisch belastet werden, fanden diese vor der vorliegenden Erfindung nur sehr beschränkt Einsatzgebiete.

Weitere Produktionsrückstände fallen bei der Verarbeitung von Rohbaumwolle an. Der Samen der Baumwolle bildet als Verlängerung seiner Epidermis längere Haare, die als Lint bezeichnet werden, und drei bis fünf Tage nach der Blüte kürzere Haare, die Linter oder Grundbaumwolle genannt werden. Zur Gewinnung von Baumwolle wird Rohbaumwolle entkörnt. Dabei werden die Lints von den Samen abgerissen, während die Grundbaumwolle am Samen verbleibt. In der Regel bleiben bei 4 Gramm Rohbaumwolle nach dem Entkörnen etwa 1,5 Gramm Grundbaumwolle übrig. Mit sogenannten Lintermaschinen, Lintergins oder Entwollmaschinen wird die Grundbaumwolle von den Samen entfernt. In der Regel werden Lints zu dünnen Fäden gesponnen und beispielsweise für Textilien verwendet. Da Grundbaumwolle eine geringere Faserlänge und durch den zweifachen Entkernprozess eine geringere Festigkeit aufweist, fand diese vor der vorliegenden Erfindung nur wenige Einsatzgebiete, wie in der Papierherstellung, als Filz oder als Polstermaterial.

Produktionsrückstände fallen außerdem beim Kardieren beispielsweise von Baumwolle an. Neben Schmutz und Staub umfasst der sogenannte Kardenabfall auch Fasern. Diese können über Kardenabfall-Reinigungsmaschinen von dem verbleibenden Abfall gereinigt werden. Da von Kardenabfall gewonnene Fasern, insbesondre auf Grund des zweifachen Verarbeitens, nämlichen in der Kardiermaschine und in der Kardenabfall-Reinigungsmaschine, in der Regel sehr kurze Faserlänge und eine geringe Festigkeit aufweisen, fanden auch diese vor der vorliegenden Erfindung nur beschränkt Einsatzgebiete.

Weitere Produktionsrückstände fallen in Form von Schlichtfasern an. Schlichtfasern sind mit einem Schlichtmittel, insbesondere umfassend Stärke, Polyvinylacetat, Natrium-Carboxymethylcellulose und/oder Polyacrylate, beschichtete Fasern. Schlichtmittel werden insbesondere vor dem Webprozess zur Stärkung der Kettfäden aufgebracht. Von dem fertigen Gewebe werden die Schlichtmittel mittels der sogenannten Entschlichtung wieder entfernt. Fäden, die aus Produktionsrückständen gewonnen werden, die zwischen dem Schlichten und dem Entschlichten anfallen, weisen das Schlichtmittel auf. Eine Entschlichtung dieser Produktionsrückstände ist häufig aus ökonomischen und/oder ökologischen Gründen nicht sinnvoll, sodass Schlichtfäden vor der vorliegenden Erfindung nur eingeschränkte wiederverwendet wurden.

Aber auch bei der Herstellung, insbesondere in der Weberei, und Verarbeitung von Geweben und Gestricken zu Kleidung fallen beispielsweise Schnittreste als Produktionsrückstände an. Schließlich fallen auch die Kleidungsstücke, beispielsweise Jeans oder T-Shirts, am Ende ihres Lebenszyklus als Sekundärrohstoffe an. Aus Nachhaltigkeitsgründen ist es geboten, diese Rückstände wiederzuverwerten. So ist es beispielsweise bekannt gebrauchte Textilien und Schnittreste über den sogenannten Reißprozess mit einem Reißtambour in Reißfasern zu überführen. Auch diese erkennt der Fachmann insbesondere an Ihrer ausgefransten Struktur. Dadurch kann das Textil wieder teilweise in Fasern überführt werden. Neben Fasern umfassen Reißfasern aber häufig auch nicht faserförmige Textilreste, wie Pitzen, Fadenstücke und Textilflächenreste, welche die Wiederverwertbarkeit der Fasern erschweren. Im Rahmen der vorliegenden Erfindung wurde erkannt, dass diese Textilreste zumindest teilweise in einem Zerkleinerungsschritt, beispielsweise mit Schneidmühle und/oder Refiner, in Fasermaterial überführt werden können.

Sekundärrohstoffe fallen außerdem in der Papierindustrie, insbesondere in Form von Altpapierstoff an, dessen Faserlänge mit jedem Wiederverwertungszyklus kleiner wird, bis die Fasern an einem Punkt dem nicht wiederverwertbaren Abfällen zugeordnet werden.

Zur Wiederverwertung von rezykliertem Fasermaterial, insbesondere von Reißfasern und/oder Kämmlingen, ist es bekannt diese wieder zu Garnen zu spinnen. Hierzu ist jedoch je nach Spinnverfahren eine gewisse Durchschnittslänge der Fasern erforderlich. Um diese bereitzustellen, werden zu kurze Fasern teilweise aussortiert wodurch bereits beim ersten Wiederverwertungszyklus Rückstände entstehen, die auf diese Weise nicht wiederverwertet werden können. Aber selbst die Fasern, die erfolgreich wiederverwertet werden können, werden durch jeden weiteren Wiederverwertungszyklus, beispielsweise durch Reißen, kürzer, bis sie selbst zu nicht wiederverwertbaren Rückständen werden. Überraschenderweise hat sich herausgestellt, dass rezykliertes Pflanzenfasermaterial nicht nur durch das Spinnen in Garne wiederverwendet werden kann, sondern auch in gattungsgemäßen Verbundmaterialien. Insbesondere im Zusammenhang mit den zuvor beschriebenen Mengenanteilen von Bindemittel und Fasermaterial können derartige Verbundmaterialien für die weiter unten beschriebenen Anwendungszwecke verwendet werden. Insbesondere durch den Einsatz von Bindemitteln kann dabei rezykliertes Pflanzenfasermaterial mit deutlich kürzeren Faserlängen wiederverwendet werden als bei der Herstellung von Garnen. So ist beispielsweise bei der Herstellung von Garnen in der Regel eine Mindestfaserlänge von 25 mm der wiederzuverwertenden Fasern erforderlich. Im Gegensatz dazu kann mit dem erfindungsgemäßen Verbundmaterial auch Fasermaterial wiederverwendet werden, das in einem deutlich geringeren Faserlängenbereich, wie insbesondere im Detail weiter unten beschrieben, liegt. Insbesondere hat sich herausgestellt, dass Fasermaterial mit einer Faserlänge von weniger als 2 mm wiederverwendet werden kann, wofür es vor der vorliegenden Erfindung keine höherwertigen Wiederverwendungsmöglichkeiten gab. Unter höherwertigen Wiederverwendungsmöglichkeiten sind insbesondere die weiter unten beschriebenen Einsatzgebiete des Verbundmaterials zu verstehen. Dabei wurde festgestellt, dass die mit rezykliertem Pflanzenfasermaterial einhergehende kürzere Faserlänge für die Einsatzgebiete der vorliegenden Erfindung nicht nur ausreicht, sondern sogar vorteilhaft ist. Denn die vorliegende Erfindung nutzt insbesondere Fasern mit relativ kurzer Faserlänge, die beim Einsatz von längeren Fasern als Ausgangsmaterial zunächst in einem zeit- und wasserverbrauchintensiven Verfahren, insbesondere mittels Refiner, zerkleinert werden müssen. Durch den erfindungsgemäßen Einsatz von rezykliertem Pflanzenfasermaterial werden daher zusätzlich zum Erschließen neuer Einsatzgebiete, die Kosten und der Ressourcenverbrauch gegenüber Primärfaserrohstoffen reduziert.

Insbesondere ist das rezyklierte Fasermaterial ausgewählt aus rezykliertem Fasermaterial aus der Baumwollverarbeitung, der Textilherstellung, der Papierherstellung und/oder der Lebensmittelverarbeitung. Vorzugsweise ist das das rezyklierte Fasermaterial ausgewählt aus Kämmlingen, Grundbaumwolle, Kardenrückständen, Schlichtfasern, Reißfasern, Papierfasermaterial, und/oder Spelzfasermaterial. Alternativ oder zusätzlich weist das rezyklierte Pflanzenfasermaterial Baumwollfasermaterial, Holzfasermaterial und/oder Pflanzenfasermaterial der Gattung der Poales auf. Insbesondere beträgt der Anteil der zuvor beschriebenen bevorzugten rezyklierten Fasermaterialien wenigstens 50 Gew.-%, 75 Gew.-%, 90 Gew.-% oder 95 Gew.-%, 97 Gew.-% oder 99 Gew.-%, bezogen auf das Gesamtgewicht des rezyklierten Pflanzenfasermaterials.

In bevorzugten Ausführungsformen weist das rezyklierte Pflanzenfasermaterial rezykliertes Baumwollfasermaterial, insbesondere in Form von Reißbaumwolle, Baumwollkämmlingen, Grundbaumwolle, Baumwollkardenrückständen und/oder Baumwollschlichtfasen auf. Besonders bevorzugt liegt der Anteil der rezyklierten Baumwolle, bezogen auf das Gesamtgewicht des Pflanzenfasermaterials, zwischen 30% und 100%, 50% und 95%, besonders bevorzugt zwischen 70% und 90%. Der Einsatz von Baumwollfasern hat sich als besonders bevorzugt herausgestellt, da diese als Produktionsrückstände in großen Mengen zur Verfügung stehen und spätestens nach dem ersten oder zweiten Wiederverwendungszyklus aufgrund ihrer kurzen Faserlänge nicht mehr für Textilien wiederverwendet werden können. Besonders bevorzugt handelt es sich bei dem rezyklierten Pflanzenfasermaterial um aus Kleidung, insbesondere aus Jeansstoffen, wiedergewonnenes Pflanzenfasermaterial. Besonders bevorzugt handelt sich dabei um Pflanzenfasermaterial, das aus gefärbten Kleidungsstücken wiedergewonnenen wird, was an der Färbung der daraus wiedergewonnenen Pflanzenfasermaterial erkennbar ist. Besonders bevorzugt handelt es sich bei der Reißbaumwolle um aus Jeansstoff wiedergewonnenes Pflanzenfasermaterial, die insbesondere an ihrer Indigofärbung, die für Jeansstoffe üblich ist, erkennbar ist. Geeignetes Ausgangsmaterial für die Herstellung des erfindungsgemäßen Verbundwerkstoffs mit rezyklierten Baumwollfasern sind insbesondere die Baumwollschlichtfäden mit der Artikelnummer 449S1G des Unternehmens WSR Advanced Raw Materials GmbH, die aus Jeans gewonnene Reißbaumwolle mit der Artikelnummer 10348 des Unternehmens ALTEX Textil-Recycling oder die Reißbaumwolle mit der Artikelnummer 11106 des Unternehmens des Unternehmens ALTEX Textil-Recycling.

Üblicherweise handelt es sich bei rezykliertem Pflanzenfasermaterial um ein Fasergemisch. Dies liegt insbesondere daran, dass beispielsweise Kleidungsstücke aufgrund erhöhter Anforderung an deren Komfort in der Regel einen Mindestanteil an Fasern aufweist, die die Eigenschaften des Garns beeinflussen. Beispielsweise werden in der Regel Elastomerfasern, wie Spandexfasern, eingesetzt, um die Elastizität der Kleidungsstücke zu erhöhen. Weiterhin werden häufig Polyesterfasern zur Erhöhung der Formstabilität der Kleidungsstücke eingesetzt. Dies führt dazu, dass rezykliertes Pflanzenfasermaterial, das aus derartigen Textilien gewonnen wird, einen Anteil an Mischfasern aufweist. Bei der klassischen Wiederverwertung von rezykliertes Pflanzenfasermaterial in Form von Garnen beeinträchtigt der Anteil der Mischfasern die Eigenschaften der daraus gesponnenen Garne. Dadurch ist rezykliertes Pflanzenfasermaterial mit einem Anteil an Mischfasern nur begrenzt für die Wiederverwertung in Garnen geeignet. Je höher der Anteil der Mischfasern wird, umso geringer wird die Eignung für die Wiederverwertung in Garnen.

Unter Mischfasern sind insbesondere nichtpflanzliche Fasern, insbesondere keine Baumwollfasern, Holzfasern und/oder Fasern der Ordnung der Poales, zu verstehen. Insbesondere sind unter Mischfasern synthetische Fasern und/oder Naturfasern zu verstehen. Dabei kommen sämtliche, insbesondere in der Textilindustrie eingesetzten Mischfasern in Betracht. Insbesondere kommen für die Mischfasern Fasern ausgewählt aus der Gruppe bestehend aus Polyamidfasermaterial, insbesondere Polyesterfasermaterial, Polyacrylfasermaterial, Elastanfasermaterial, Tierfasermaterial, wie Lederfasermaterial, Wollfasermaterial und/oder Seidenfasermaterial, oder Mischungen von einem oder mehreren daraus in Betracht. Überraschenderweise hat sich herausgestellt, dass selbst ein hoher Anteil von Mischfasern bei erfindungsgemäßen Verbundmaterialien eingesetzt werden kann, ohne deren Eignung für die nachfolgend beschriebenen Zwecke zu beeinträchtigen.

Insbesondere kann das rezyklierte Pflanzenfasermaterial ein Fasergemisch aus Pflanzenfasermaterial, insbesondere Baumwollfasern Holzfasern und/oder Fasern der Ordnung der Poales, und Mischfasern aufweisen. Insbesondere beträgt der Anteil der Mischfasern wenigstens 1 Gew.-%, 2 Gew.-%, 3 Gew.-%, 5 Gew.-%, 10 Gew.-%, 15 Gew.-%, 20 Gew.-% und/oder 25 Gew.-%. Alternativ oder zusätzlich beträgt der Anteil der Mischfasern höchstens 50 Gew.-%, 40 Gew.-%, 30 Gew.-%, 25 Gew.-%, 20 Gew.-%, 15 Gew.-% oder 10 Gew.-%, bezogen auf das Gesamtgewicht des rezykliertes Pflanzenfasermaterials. Vorzugsweise beträgt der Mischfaseranteil 1 Gew.-% bis 50 Gew.-%, insbesondere 5 Gew.-% bis 35 Gew.-%, besonders bevorzugt 10 Gew.-% bis 25 Gew.-%, bezogen auf das Gesamtgewicht des rezyklierten Pflanzenfasermaterial.

In einem Ausführungsbeispiel besteht das rezyklierte Pflanzenfasermaterial, insbesondere Reißfasermaterial, zu mindestens 75 Gew.-% aus Pflanzenfasermaterial, insbesondere Baumwolle, und zu höchstens 25 Gew.-% aus Mischfasern. Insbesondere wird bei dieser Ausführungsform rezykliertes Pflanzenfasermaterial mit einer mittleren Ausgangsfaserlänge zwischen 30 und 50 mm verwendet. Die mittlere Faserlänge ist durch Messen der Faserlänge der Fasern in einem Toleranzbereich und anschließendes Mitteln der Faserlänge über die Gesamtanzahl der gemessenen Fasern ermittelbar. Vorzugsweise liegt der Toleranzbereich zwischen 5 mm und 80 mm. Das rezyklierte Pflanzenfasermaterial gemäß dieser Ausführungsform der Erfindung kann nachfolgend zerkleinert werden, um eine Faserverteilung wie in dem nachfolgend beschriebenen Aspekt der Erfindung beschrieben zu erhalten. Geeignetes Pflanzenfasermaterial für diese Ausführungsform ist beispielsweise Reißbaumwolle mit des Artikel Nr. 11106 des Unternehmens ALTEX Textil-Recycling.

In einer alternativen Ausführungsform wird rezykliertes Pflanzenfasermaterial, insbesondere Reißfasermaterial, mit einem Pflanzenfasermaterialanteil, insbesondere Baumwollgewichtsanteil, von mindestens 90 Gew.-% und einem Mischfaseranteil von höchstens 10 Gew.-%, bezogen auf das Gesamtgewicht des rezyklierten Pflanzenfasermaterial, verwendet. Die Fasern bei dieser Ausführungsform können gefärbt, insbesondere blau gefärbt, sein. Vorzugsweise beträgt die mittlere Faserlänge bei dieser Ausführungsform 15 bis 30 mm, wobei der Toleranzbereich, in dem die Fasern zur Ermittlung der Faserlänge gemessen werden, 3 mm bis 40 mm betragen kann. Geeignetes rezykliertes Pflanzenfasermaterial für diese Ausführungsform ist beispielsweise aus Jeans gewonnene Reißbaumwolle mit der Artikelnummer 10348 des Unternehmens ALTEX Textil-Recycling.

Alternativ zum Einsatz von Baumwolle hat sich der Einsatz von Papierfasermaterial, als rezykliertes Pflanzenfasermaterial, insbesondere Sekundärrohstoff, als vorteilhaft herausgestellt. Vorzugsweise beträgt der Anteil von Papierfasermaterial wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-% bezogen auf das Gesamtgewicht des rezyklierten Pflanzenfasermaterials. Unter Papierfasermaterial ist insbesondere aus Papier und/oder Pappe gewonnenes Fasermaterial zu verstehen. Papierfasermaterial kann auch als Altpapierstoff bezeichnet werden. Geeignetes Papierfasermaterial ist insbesondere Altpapierstoff der Gruppen 2 bis 5 gemäß DIN EN 643:2014-11. Bevorzugt handelt es sich bei dem Altpapierstoff um Altpapierstoff der Gruppe 2 oder 5 gemäß DIN EN 643:2014-11. Als besonders geeignet hat sich Altpapierstoff der Klassen 2.10.00, 2.11.00, 5.05.00, 5.05.01, 5.06.00, 5.06.01, 5.07.00, 5.07.01, 5.14.00 und/oder 5.14.01 gemäß DIN EN 643:2014-11 herausgestellt. Als besonders bevorzugt hat sich Altpapierstoff der Klasse 5.14.00 und/oder 5.14.01 herausgestellt.

Vorzugsweise ist das Papierfasermaterial aus Papier und/oder Pappe gewonnen, das/die ein Additiv umfasst, das ausgewählt ist aus der Gruppe, bestehend aus einem Flockungsmittel, einem Fixiermittel, einem Entwässerungshilfsmittel, einem Füllstoff und einem Nassfestmittel, insbesondere ausgewählt aus Polyamin-Epichlorhydrin-Harze, Harnstoff- oder Melamin-Formaldehyd-Harze und vernetzte Aldehyde wie glyoxylierte Polyacrylamide. Handelsnamen für geeignete Nassfestmittel sind GILUTON, LURESIN KS, QUIMEX 8015, AMRES ULTRA 25. Insbesondere nassfeste Papiere, wie die gemäß EN 643 den Klassen 5.05.00, 5.05.01, 5.06.00, 5.06.01, 5.07.00, 5.07.01, 5.14.00 und 5.14.01 zugeordneten Papiere, können auf Grund der darin eingesetzten Nassfestmittel nicht als Recyclingpapier wiederverwendet werden. Denn die darin verwendeten Nassfestmittel können mit dem für die Papierindustrie klassischem Aufschlagen nicht oder nur unter hohem Reinigungsaufwand und/oder Ausscheidungsmengen in eine homogene Faserpulpe überführt werden. Dies wird auch als fehlende Repulpierbarkeit bezeichnet. Es hat sich gezeigt, dass dieses Problem durch Zerfasern, beispielsweise durch den/die zuvor und nachfolgend beschriebene/n Refiner, insbesondere Kegelrefiner oder Scheibenrefiner, und/oder Schneidmühle gelöst werden kann. Dadurch ermöglicht das vorliegende Verbundmaterial die Wiederverwertung von nassfestem Papier. Vorzugsweise umfasst das Papierfasermaterial daher aus nassfestem Papier wiedergewonnenes Fasermaterial. Insbesondere lässt sich dies in dem Verbundmaterial durch das Vorhandensein von Nassfestmitteln nachweisen. Insbesondere weist das Verbundmaterial Nassfestmittel auf.

Vorzugsweise beträgt der Anteil des rezyklierten Pflanzenfasermaterial, insbesondere der zuvor beschriebenen bevorzugten rezyklierten Pflanzenfasermaterialien, wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials.

Ein weiterer Aspekt der Erfindung betrifft ebenfalls ein Verbundmaterial umfassend ein Fasermaterial, das Pflanzenfasermaterial aufweist, und ein Bindemittel, wobei das Pflanzenfasermaterial gemäß diesem Aspekt der Erfindung Holzfasermaterial aufweist. Das Verbundmaterial kann wie das zuvor beschriebene Verbundmaterial ausgebildet sein, wobei das Bindemittel einen biologisch abbaubaren Anteil aufweisen kann oder nicht, das Pflanzenfasermaterial der Ordnung der Poales gemäß dem entsprechenden Aspekt der Erfindung aufweisen kann oder nicht und/oder das Pflanzenfasermaterial rezyklierten Pflanzenfasermaterial gemäß dem entsprechenden Aspekt der Erfindung aufweisen kann oder nicht. Entscheidend für diesen Aspekt der Erfindung ist lediglich der Einsatz von Holzfasermaterial. Unter Holzfasermaterial soll insbesondere aus Holz gewonnenes Fasermaterial zu verstehen sein. Unter Holz ist insbesondere das harte Gewebe der Sprossachsen (Stamm, Äste und Zweige) von Bäumen und Sträuchern zu verstehen. Insbesondere ist unter Holz das von Kambium erzeugte sekundäre Xylem der Samenpflanzen definiert. Nach dieser Definition sind insbesondere Gewebe von Palmen und anderen höheren Pflanzen kein Holz im Sinne der vorliegenden Erfindung. Insbesondere zeichnet sich Holz durch die Einlagerung von Lignin in die Zellwand aus. Insbesondere ist unter Holz daher lignifiziertes (verholztes) pflanzliches Gewebe zu verstehen. Vorzugsweise ist unter Holz Nadelholz und/oder Laubholz zu verstehen. Unter Nadelholz ist insbesondere Holz mit einem Zelluloseanteil von 42 bis 49 Gew.-%, einem Hemizelluloseanteil von 24 bis 30 Gew.-%, einem Ligninanteil von 25 bis 30 Gew.-%, einem Extraktstoffanteil von 2 bis 9 Gew.-% und/oder einem Mineralienanteil von 0,2 bis 0,8 Gew.-% zu verstehen. Unter Nadelholz ist insbesondere ein Holz mit einem Zelluloseanteil von 42 bis 51 Gew.-%, ein Hemizelluloseanteil von 27 bis 40 Gew.-%, einem Ligninanteil von 18 bis 14 Gew.-%, einem Extraktstoffanteil von 1 bis 10 Gew.-% und einem Mineralienanteil von 0,2 bis 0,8 Gew.-% zu verstehen. Holz weist insbesondere einen spezifischen anatomischen Aufbau auf, sodass sich Holzarten anhand ihrer Makro- und Mikrostrukturen voneinander unterscheiden lassen. Hierzu zieht der Fachmann die wissenschaftliche Beschreibung von Holzstrukturen und Bestimmungen von Holzarten der Holzanatomie heran. Alternativ oder zusätzlich zum Holzfasermaterial kann das Verbundmaterial gemäß diesem Aspekt der Erfindung auch Zellulosefasermaterial aufweisen, insbesondere in den nachfolgend beschriebenen Mengenangaben des Holzfasermaterials. Insbesondere kann es sich bei dem Zellulosefasermaterial um Zellulosestoff und/oder Altpapierstoff, der auch als Papierfasermaterial bezeichnet werden kann, handeln.

Ein wesentlicher Vorteil an der Verwendung von aus Holz gewonnenen Fasern besteht darin, dass Holz große Mengen an CO₂ einspeichert, die durch die Kompostierung von Holz wieder freigesetzt und somit der Atmosphäre zugeführt werden. Demnach besteht ein Bedarf daran, das in Holz gespeicherte CO₂ so lange wie möglich in dem Produktzyklus zu behalten, um die Freisetzung des CO₂ zu verhindern. Die Erfinder der vorliegenden Erfindung haben daher erkannt, dass es von Vorteil ist, aus Holz gewonnenes Fasermaterial für die nachfolgend beschriebenen Einsatzzwecke zu verwenden, insbesondere für die Ummantelung, Kaschierung oder Tapezierung von Wänden, Böden, Decken oder Fensterrahmen, da diese in der Regel einen langen Produktlebenszyklus haben und somit das in dem Holz gespeicherte CO₂ langfristig binden. Ein weiterer Vorteil von Holz besteht darin, dass dieser als natürlicher CO₂-Speicher auch langfristig als Fasermaterial zur Verfügung stehen wird.

Bevorzugt weist das Holzfasermaterial Zellstoff, Holzstoff und/oder Altpapierstoff auf, insbesondere bestehend aus einem oder einer Mischung von einem oder mehreren davon. Diese Stoffe stellen die wichtigsten Faserstoffe für die Herstellung von Papier dar. Papier wird heutzutage nicht nur für Schreibwaren wie Blattpapier eingesetzt, sondern auch für Verpackungen wie Lebensmittelverpackungen, und Behälter, wie To-Go-Becher, To-Go-Teller, aber auch für Einmalprodukte wie Strohhalme aus Papier. Dabei wird Holzfasermaterial bereits heute häufig recycelt. Jedoch verkürzt sich mit jedem Recyclingschritt die Faserlänge des Holzfasermaterials, wodurch dessen Wiederverwertbarkeit immer geringer wird, bis schlussendlich nicht wiederverwertbare Rückstände übrigbleiben. Dies ist vor allem vor dem Hintergrund problematisch, dass beispielsweise Papierverpackungen und Papierbehälter einen sehr kurzen Lebenszyklus haben, was dazu führt, dass selbst bei mehreren Wiederverwertungszyklen, das in dem Holz gespeicherte CO₂ bereits nach kurzer Zeit durch Kompostierung der Rückstände der Atmosphäre zugeführt werden muss. Ein weiteres Problem besteht darin, dass beispielsweise beim Einsatz von Holzfasermaterial für flüssigkeitsführende Anwendungen, wie To-Go-Kaffeebecher und/oder Strohhalme, eine Beschichtung aufgetragen werden muss, die das Durchweichen verhindert. Diese Beschichtungen sind teilweise nicht oder nur langsam biologisch abbaubar. Aber selbst wenn die Beschichtungen biologisch abbaubar sind, stehen sie einer Wiederverwertung des Fasermaterials zumindest für einige Recyclingprodukte teilweise im Weg. Insbesondere nassfeste Papiere können aus den zuvor beschriebenen Gründen nicht als Recyclingpapier wiederverwendet werden.

Vorzugsweise umfasst das Fasermaterial gemäß diesem und/oder den anderen Aspekten der Erfindung daher aus nassfestem Papier wiedergewonnenes Fasermaterial.

Insofern ermöglicht das erfindungsgemäße Verbundmaterial eine deutlich längere Speicherung des in dem Holzmaterial gebundenen CO₂ insbesondere bei den nachfolgend beschriebenen Verwendungen. Darüber hinaus hat sich herausgestellt, dass das erfindungsgemäße Verbundmaterial auch Holzfasermaterial mit sehr kurzer Faserlänge, wie nachfolgend beschrieben, wiederverwerten kann und somit Fasermaterial, das für andere Einsatzgebiete, wie die Papierherstellung, nicht mehr geeignet ist, weiterverwertet werden kann. Insbesondere hat sich herausgestellt, dass selbst Rückstände, wie Rückstände von Beschichtungen von Behältern, wie Kaffeebechern, in dem Fasermaterial dessen Wiederverwendung für die nachfolgend beschriebenen Produkte nicht im Wege steht, sodass mit der vorliegenden Erfindung eine weitere Materialgruppe wiederverwertet werden kann, die zuvor den nicht wiederverwertbaren Rückständen zugeordnet wurde.

Es hat sich daher als besonders bevorzugt herausgestellt, dass das Holzfasermaterial Altpapierstoff, das auch als Papierfasermaterial bezeichnet werden kann, aufweist. Insbesondere weist das Holzfasermaterial Altpapierstoff zu einem Anteil von wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Holzfasermaterials, auf. Altpapierstoff wird insbesondere auch als Sekundärfaserstoff bezeichnet. Unter Altpapierstoff ist insbesondere der aus Altpapier produzierte Halbstoff zu verstehen. Unter Papier ist insbesondere sowohl Papier als auch Pappe gemäß DIN6730 zu verstehen. Insbesondere zeichnet sich Papier durch eine flächenbezogene Masse von 7 bis 225 g/m² und Pappe durch eine flächenbezogene Masse ab 225 g/m² aus.

Vorzugsweise weist der Altpapierstoff aus bedruckten oder anderweitig gefärbten Altpapier wiedergewonnen Altpapierstoff, insbesondere zu einem Anteil von 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Altpapierstoffs, auf. Dies lässt sich insbesondere durch die Färbung der Fasern in dem Altpapierstoff erkennen.

Altpapierstoff wird als sekundärer Faserstoff (Recycling-Faserstoff/Sekundärrohstoff) grundsätzlich von Holzstoff und Zellulose unterschieden. Holzstoff ist insbesondere eine zusammenfassende Bezeichnung für Faserstoffe, die durch mechanische Zerfaserung aus Holz gewonnen werden. Unter Zellstoff ist insbesondere die beim chemischen Aufschluss von Pflanzenfasern entstehende faserige Masse, die insbesondere vorwiegend aus Zellulose besteht, zu verstehen.

Vorzugsweise weist das Holzfasermaterial wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials auf.

Ein weiterer Aspekt der Erfindung betrifft ebenfalls ein Verbundmaterial umfassend ein Fasermaterial, das Pflanzenfasermaterial aufweist, und ein Bindemittel, wobei ein Hauptfaseranteil von wenigstens 40 Vol.-% des Pflanzenfasermaterials in einem Faserlängenbereich zwischen 0,2 mm und 2 mm liegt. Das Verbundmaterial kann wie zuvor beschrieben ausgebildet sein, wobei das Bindemittel einen biologisch abbaubaren Anteil aufweisen kann oder nicht, das Pflanzenfasermaterial Pflanzenfasermaterial der Ordnung der Poales gemäß dem entsprechenden Aspekt der Erfindung aufweisen kann oder nicht, das Pflanzenfasermaterial rezyklierten Pflanzenfasermaterial gemäß dem entsprechenden Aspekt der Erfindung umfassen kann oder nicht und/oder das Pflanzenfasermaterial Holzfasermaterial gemäß dem entsprechenden Aspekt der Erfindung aufweisen kann oder nicht.

Vorzugsweise umfasst der Hauptfaseranteil wenigstens 45 Vol.-%, 55 Vol.-%, 60 Vol.-% oder 65 Vol.-% des Pflanzenfasermaterials. Insbesondere umfasst der Hauptfaseranteil zwischen 40 Vol.-% und 100 Vol.-%, vorzugsweise zwischen 50 Vol.-% und 80 Vol.-%, besonders bevorzugt zwischen 60 Vol.-% und 70 Vol.-%, insbesondere etwa 65 Vol.-%, des Pflanzenfasermaterials. Es hat sich herausgestellt, dass eine Pflanzenfaserlänge von mindestens 0,2 mm zu den oben genannten Gewichtsprozentangaben dem Verbundmaterial die nötige Festigkeit verleiht, um es für die nachfolgend beschriebenen Einsatzzwecke zu verwenden. Insbesondere kann durch den erfindungsgemäßen Hauptanteil von Fasern mit einer Mindestfaserlänge von 0,2 mm eine ausreichende Verhakung des Fasermaterials erzielt werden, um dem Verbundmaterial eine ausreichende Festigkeit und Flexibilität zur Verarbeitung in den nachfolgend beschriebenen Einsatzgebieten zu verleihen. Gleichzeitig ermöglicht die Mindestfaserlänge von 0,2 mm den Bindemittelanteil, bezogen auf das Gesamtgewicht des Verbundmaterials, möglichst gering zu halten, insbesondere unterhalb von 50 Gew.-%, 45 Gew.-%, 40 Gew.-%, 35 Gew.-%, 30 Gew.-% oder 25 Gew.-%, zu halten und somit einen höheren Anteil von CO₂ speicherndem Fasermaterialien in dem Verbundmaterial zu verwenden.

Insbesondere weist der Hauptfaseranteil einen unteren Hauptfaseranteil mit einem Faserlängenbereich zwischen 0,2 mm und 1,0 mm und einen oberen Hauptfaseranteil mit einem Faserlängenbereich zwischen mehr als 1,0 mm und 2,0 mm auf. Insbesondere liegt der untere Hauptfaseranteil zu wenigstens 40 Vol.-%, 50 Vol.-%, 60 Vol.-%, 65 Vol.-% oder 70 Vol.-% des Hauptfaseranteils vor und/oder der obere Hauptfaseranteil zu wenigstens 5 Vol.-%, 10 Vol.-%, 20 Vol.-%, 25 Vol.-% oder 30% Vol.-% des Hauptfaseranteils vor. Insbesondere beträgt das Volumenverhältnis von unterem Hauptfaseranteil zu oberen Hauptfaseranteil zwischen 1:1 und 3:1, vorzugsweise zwischen 1,5:1 und 2,5:1, besonders bevorzugt zwischen 1,8:1 und 2,2:1. Beispielsweise kann der untere Hauptfaseranteil zu 45 Vol.-% des Pflanzenfasermaterials und der obere Hauptfaseranteil zu 20 Vol.-% des Pflanzenfasermaterials vorliegen. Bezüglich der oberen Grenze des erfindungsgemäßen Hauptfaseranteils hat sich herausgestellt, dass Pflanzenfasern mit dieser Länge nahezu keine Weiterverwendungsmöglichkeit in bekannten Recyclingprodukten finden. Insbesondere für die Papierherstellung und die Garnherstellung sind in der Regel längere Fasern, für Letztere insbesondere mit einer Länge von mehr als 25 mm, erforderlich. Daher konnten insbesondere Kämmlinge, Grundbaumwolle, Kardenrückständen, Schlichtfasern, Reißfasern, Papierfasermaterial und/oder Spelzfasermaterial in dem erfindungsgemäßen Faserlängenbereich vor der vorliegenden Erfindung kaum wiederverwendet werden. Insofern erschließt die vorliegende Erfindung einen gänzlich neuen Anwendungsbereich für pflanzliche Fasermaterialien, die zuvor den nicht wiederverwertbaren Rückständen zugeführt und kompostiert werden mussten. Insbesondere können deutlich höherwertige Einsatzgebiete für derartige Faserlängenbereiche zwischen 0,2 mm und 2,0 mm erzielt werden als die bisher bekannten, die sich insbesondere auf kurzlebige Produkte wie Putzwolle und Malervlies beschränken.

Insbesondere hat sich eine Mindestfaserlänge von 0,2 mm als vorteilhaft für die erforderliche Verzweigung der Fasern zu einem Faservlies herausgestellt. Es hat sich jedoch auch gezeigt, dass zu lange Fasern dazu neigen Faserklumpen zu bilden, die der Bildung eines homogenen Faservlieses entgegenstehen. In der Papierindustrie wird das Problem der Faserklumpen durch einen sehr dünnflüssigen Faserbrei mit einem Gewichtsverhältnis von Fasermaterial zu Wasser von etwa 1 zu 1000 gelöst. Dies führt zu einem hohen Wasserverbrauch. Auch der zum Trocknen erforderliche Energiebedarf ist auf Grund des hohen Wassergehalts unbefriedigend hoch. Es hat sich herausgestellt, dass durch einen hohen Faseranteil von Fasern mit einer maximalen Faserlänge von maximal 5 mm Verklumpungen mit deutlich geringeren Wassermengen, insbesondere mit einem Gewichtsverhältnis von Fasermaterial zu Wasser zwischen 10 zu 1000 und 30 zu 1000, vermieden werden können. Dadurch kann der Wasserverbrauch um den Faktor 10 bis 30 und damit auch die für das Trocknen erforderliche Energie reduziert werden.

Demnach hat es sich als bevorzugt herausgestellt, dass das Verbundmaterial wenigstens 40 Vol.-%, besonders bevorzugt wenigstens 50 Vol.-%, 60 Vol.-%, 70 Vol.-%,80 Vol.-% oder 90 Vol.-%, noch bevorzugter wenigstens 92 Vol.-%, 94 Vol.-%, 96 Vol.-%, 98 Vol.-%, 99Vol.-% oder 99,5 Vol.-% an Fasern mit einer Faserlänge von maximal 5 mm aufweist.

Ein weiterer Aspekt der Erfindung betrifft ebenfalls ein Verbundmaterial umfassend ein Fasermaterial, das Pflanzenfasermaterial aufweist, und ein Bindemittel, wobei ein Kurzfaseranteil von wenigstens 5 Vol.%, insbesondere von wenigstens 10 Vol.-%, 15 Vol.-% 20 Vol.-% oder 25 Vol.-%, des Pflanzenfasermaterials eine Faserlänge von weniger als 0,2 mm aufweist, insbesondere in einem Faserlängenbereich zwischen 0,02 mm und weniger als 0,2 mm liegt. Vorzugsweise beträgt der Kurzfaseranteil höchstens 40 Vol.-%, höchstens 35 Vol.-%, 30 Vol.-% oder 25 Vol.-%, des Pflanzenfasermaterials. Das Verbundmaterial kann wie zuvor beschrieben ausgebildet sein, wobei das Bindemittel einen biologisch abbaubaren Anteil aufweisen kann oder nicht, das Pflanzenfasermaterial Pflanzenfasermaterial der Ordnung der Poales gemäß dem entsprechenden Aspekt der Erfindung aufweisen kann oder nicht, das Pflanzenfasermaterial rezyklierten Pflanzenfasermaterial gemäß dem entsprechenden Aspekt der Erfindung umfassen kann oder nicht, das Pflanzenfasermaterial Holzfasermaterial gemäß dem entsprechenden Aspekt der Erfindung aufweisen kann oder nicht und/oder der Hauptfaseranteil gemäß dem entsprechenden Aspekt der Erfindung vorliegen kann oder nicht.

Vorzugsweise weist das Pflanzenfasermaterial den Kurzfaseranteil zu wenigstens 5 Vol.-% und höchstens 40 Vol.-%, besonders bevorzugt zwischen 10 Vol.-% und 35 Vol.-%, noch bevorzugter zwischen 20. Vol.-% und 30 Vol.-%, beispielsweise zu 25 Vol.-%, des Pflanzenfasermaterials auf. Die Erfinder haben erkannt, dass selbst mit den zuvor beschriebenen Kurzfaseranteilen noch Verbundmaterialien hergestellt werden können, die für die unten beschriebenen Einsatzzwecke geeignet sind. Dadurch kann zumindest ein Anteil von besonders niederwertigem Fasermaterial in dem erfindungsgemäßen Verbundmaterial wiederverwendet werden, was dessen Umweltverträglichkeit abermals erhöht.

Als besonders bevorzugt wurde die Kombination des zuvor beschriebenen Hauptfaseranteils mit dem Kurzfaseranteil erkannt, insbesondere wobei das Volumenverhältnis von Hauptfaseranteil zu Kurzfaseranteil zwischen 1:1 und 5:1, vorzugsweise zwischen 1,5:1 und 4:1, besonders bevorzugt zwischen 2:1 und 3:1, beträgt. Beispielsweise kann der Hauptfaseranteil zu 65 Vol.-% des Pflanzenfasermaterials und der Kurzfaseranteil zu 25 Vol.-% des Pflanzenfasermaterials vorliegen.

Es hat sich herausgestellt, dass insbesondere die Kombination aus dem Bindemittel in den zuvor beschriebenen Mengenanteilen, dem zuvor definierte Hauptfaseranteil und dem zuvor beschriebenen Kurzfaseranteil ein Verbundmaterial bereitstellt, das einen hohen Anteil an anderweitig kaum wiederverwertbaren Materialien aufweist und für die unten beschriebenen Zwecke geeignet ist.

Ein weiterer Aspekt der Erfindung betrifft ebenfalls ein Verbundmaterial umfassend ein Fasermaterial, das Pflanzenfasermaterial aufweist, und ein Bindemittel, wobei ein Langfaseranteil von wenigstens 5 Vol.-%, insbesondere von wenigstens 6 Vol.-%, 7 Vol.-%, 8 Vol.-%, 9 Vol.-% oder 10 Vol.-%, des Pflanzenfasermaterials eine Faserlänge von mehr als 2 mm aufweist, insbesondere in einem Faserlängenbereich zwischen mehr als 2 mm und maximal 5 mm liegt. Insbesondere beträgt der Langfaseranteil höchstens 20 Vol.-%, vorzugsweise höchstens 18 Vol.-%, 16 Vol.-%, 14 Vol.-%, 12 Vol.-% oder 10 Vol.-%. des Pflanzenfasermaterials. Das Verbundmaterial kann wie zuvor beschrieben ausgebildet sein, wobei das Bindemittel einen biologisch abbaubaren Anteil aufweisen kann oder nicht, das Pflanzenfasermaterial Pflanzenfasermaterial der Ordnung der Poales gemäß dem entsprechenden Aspekt der Erfindung aufweisen kann oder nicht, das Pflanzenfasermaterial rezyklierten Pflanzenfasermaterial gemäß dem entsprechenden Aspekt der Erfindung umfassen kann oder nicht, das Pflanzenfasermaterial Holzfasermaterial gemäß dem entsprechenden Aspekt der Erfindung aufweisen kann oder nicht, der Hauptfaseranteil gemäß dem entsprechenden Aspekt der Erfindung vorliegen kann oder nicht und/oder der Kurzfaseranteil gemäß dem entsprechenden Aspekt der Erfindung vorliegen kann oder nicht.

Es hat sich herausgestellt, dass Fasern mit einer Länge von mehr als 2 mm das Verbundmaterial weich machen. Die oben beschriebenen Mindestvolumenanteile haben sich hierzu als bevorzugt herausgestellt. Um die zuvor beschriebenen, mit längeren Fasern einhergehenden, Verklumpungen und den damit einhergehenden großen Wasserverbrauch weitestgehend zu vermeiden hat es sich als bevorzugt erwiesen, die oben beschriebenen Maximalvolumenanteile einzuhalten. Des Weiteren hat sich gezeigt, dass die gewünschte Weichheit bereits mit Faserlängen zwischen 2 mm und 4 mm erreichbar ist. Insofern hat es sich als bevorzugt erwiesen, den Langfaseranteil auf Fasern zu beschränken die maximal 5 mm lang sind. Als besonders bevorzugt hat es sich erweisen, dass wenigstens 50 Vol.-%, 60 Vol.-%, 70 Vol.-%, 80 Vol.-% oder 90 Vol.-% des Langfaseranteils in einem Faserlängenbereich von mehr als 2 mm und maximal 4 mm liegen und/oder maximal 10 Vol.-% des Langfaseranteils in einem Faserlängenbereich von mehr als 4 mm und maximal 5 mm liegen. So hat sich Beispielsweise eine Verteilung von etwa 9 Vol.-% des Fasermaterials in einem Faserlängenbereich von mehr als 2 mm und maximal 4 mm und von etwa 0,7 Vol.-% des Fasermaterials in einem Faserlängenbereich von mehr als 4 mm und maximal 5 mm als vorteilhaft erwiesen.

Als besonders bevorzugt hat sich die Kombination der zuvor beschriebenen Erfindungsaspekte hinsichtlich des Hauptfaseranteils, des Kurzfaseranteils und/oder dem Langfaseranteil herausgestellt. Eine bevorzugte Kombination sieht vor, zwischen 60 und 70 Vol.-% des Pflanzenfasermaterials durch den Hauptfaseranteil und zwischen 5 und 10 Vol.-% des Pflanzenfasermaterials durch den Langfaseranteil auszubilden. Eine besonders bevorzugte Kombination sieht vor zwischen 20 und 30 Vol.-% des Pflanzenfasermaterials durch den Kurzfaseranteil, zwischen 60 und 70 Vol.-% des Pflanzenfasermaterials durch den Hauptfaseranteil und zwischen 5 und 10 Vol.-% des Pflanzenfasermaterials durch den Langfaseranteil auszubilden. Beispielsweise können etwa 25 Vol.-% des Pflanzenfasermaterials durch den Kurzfaseranteil, 65 Vol.-% des Pflanzenfasermaterials durch den Hauptfaseranteil und 9,7 Vol.-% des Pflanzenfasermaterials durch den Langfaseranteil ausgebildet werden. Die verbleibenden 0,3 Vol.-% können beispielsweise durch Fasern mit einer Länge von mehr als 5 mm ausgebildet werden.

Die zuvor beschriebenen Volumenanteile der Faserlängenverteilung können insbesondere mittels dynamischer Bildanalyse, beispielsweise gemäß ISO 13322-2:2006, ermittelt werden. Die Messung kann während der Herstellung des Verbundmaterials erfolgen, beispielsweise kann nach dem Zerkleinern von Fasermaterial, insbesondere durch einem Refiner, und/oder vor dem Trocknen des das Fasermaterial enthaltenden Gemisches, eine Stichprobe entnommen und mittels dynamischer Bildanalyse gemessen werden. Die Messung kann aber auch auf Basis von bereits getrocknetem Verbundmaterialien und/oder von das Verbundmaterial enthaltenden Erzeugnissen erfolgen. Dafür kann das Verbundmaterial beispielsweise über ein geeignetes Lösungsmittel wieder in ein insbesondere flüssiges Gemisch überführt werden und anschließend mittels dynamischer Bildanalyse die Faserlängenverteilung gemessen werden. Unter Annahme einer gleichen Dichte für alle Fasern entspricht der Massenanteil dem Volumenanteil. Es sei klar, dass die zuvor und nachfolgend beschriebenen Volumenanteile bzgl. der Faserlängen alternativ auch als Massenanteile realisiert werden können. Insbesondere sollen die beanspruchten Volumenanteile alternativ als Massenanteile beansprucht werden können.

Ein weiterer Aspekt der Erfindung betrifft ebenfalls ein Verbundmaterial umfassend ein Fasermaterial, das Pflanzenmaterial aufweist, und ein Bindemittel, wobei das Pflanzenfasermaterial gefärbtes Fasermaterial aufweist. Das Verbundmaterial kann wie das zuvor beschriebene Verbundmaterial ausgebildet sein, wobei das Bindemittel einen biologisch abbaubaren Anteil aufweisen kann oder nicht, Pflanzenfasermaterial der Ordnung der Poales gemäß dem diesbezüglichen Aspekt der Erfindung aufweisen kann oder nicht, rezykliertes Pflanzenfasermaterial gemäß dem entsprechenden Aspekt der Erfindung aufweisen kann oder nicht, Holzfasermaterial gemäß dem entsprechenden Aspekt der Erfindung aufweisen kann oder nicht, den Hauptfaseranteil gemäß dem entsprechenden Aspekt der Erfindung aufweisen kann oder nicht, den Kurzfaseranteil gemäß dem entsprechenden Aspekt der Erfindung aufweisen kann oder nicht und/oder den Langfaseranteil gemäß dem entsprechenden Aspekt der Erfindung aufweisen kann oder nicht. Wesentlich bei diesem Aspekt der Erfindung ist lediglich das Vorhandensein von gefärbtem Pflanzenfasermaterial. Vorzugsweise beträgt der Anteil des gefärbten Fasermaterials wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-% oder 99 Gew.-%, bezogen auf das Gesamtgewicht des Pflanzenfasermaterials. Besonders bevorzugt ist das gefärbte Fasermaterial mit einem Küpenfarbstoff gefärbt. Vorzugsweise ist der Küpenfarbstoff ausgewählt aus der Gruppe aus Indigo, Indigoiden Farbstoffen, Indanthrenfarbstoffen, Anthrachinonfarbstoffen, Perylenfarbstoffen, Naphthalinfarbstoffen, Pyranthrenfarbstoffen und Mischungen davon. Besonders bevorzugt handelt es sich bei dem gefärbten Fasermaterial um Baumwollfasermaterial und/oder um Holzfasermaterial, insbesondere um Kämmlinge, Grundbaumwolle, Kardenrückstände, Schlichtfasern, Reißfasern und/oder Papierfasermaterial, wie zuvor beschrieben.

Die Erfinder haben erkannt, dass insbesondere gefärbtes Fasermaterial in der Regel den nicht wiederverwertbaren Rückständen zugeordnet wird, da es durch seine Färbung das Erscheinungsbild des daraus entstehenden Produktes beeinträchtigt. Es wurde jedoch erkannt, dass gerade dieses Erscheinungsbild bei potenziellen Käufern, beispielsweise von Produkten, die das Verbundmaterial umfassen oder von Käufern, die sich in Verkaufsräumen befinden, deren Wände mit dem erfindungsgemäßen Verbundmaterial ausgekleidet sind, positive Kaufreize auslösen kann, da es den Eindruck erweckt, dass der Verkäufer hohen Wert auf Nachhaltigkeit legt. Insofern stellt die Verwendung von gefärbtem Fasermaterial entgegen der vorherrschenden Meinung keinen Nachteil, sondern einen Vorteil dar. Insbesondere beim Einsatz von gefärbter Baumwolle, die beispielsweise aus Jeansstoff wiedergewonnen wurde und entsprechend mit Indigo gefärbt ist, erkennt der potenzielle Käufer an dem für Jeansstoffe typischen Indigoblau sofort, dass es sich hier um ein Produkt handelt, dass aus alten Jeans recycelt wurde.

Ein weiterer Vorteil in der Verwendung von gefärbten Fasern liegt insbesondere im Bereich des Einsatzes von gefärbtem Altpapierstoff als Fasermaterial. Bei der Wiederverwendung von Altpapierstoff zur Herstellung von Papier wird dies in der Regel zuvor einem Waschvorgang unterzogen, um möglichst viel Farbe aus dem Altpapier herauszuwaschen. Dies geht mit einem erheblichen Wasser- und Energieverbrauch sowie dem Einsatz von Waschmitteln einher, was die ökologische Verträglichkeit von recyceltem Altpapier hemmt. Während dies bei Altpapier notwendig sein mag, da dies in der Regel erneut für Schreibwaren verwendet wird, haben die Erfinder festgestellt, dass insbesondere für die nachfolgend beschriebenen Verwendungen des Verbundmaterials ein Auswaschen der Farbe nicht erforderlich ist, vielmehr, wie oben beschrieben, positive Kaufreize schaffen kann. Dadurch wird nicht nur das Erscheinungsbild des finalen Produktes ansprechender für den Käufer, sondern auch der Energieverbrauch für dessen Wiederaufbereitung im Gegensatz zu Recyclingpapier deutlich reduziert.

Insofern hat sich insbesondere die Kombination des Erfindungsaspektes bzgl. des Einsatzes von gefärbtem Fasermaterial mit den Erfindungsaspekten des Einsatzes von rezykliertem Pflanzenfasermaterial sowie des Erfindungsaspektes bzgl. des Einsatzes von Holzfasermaterial als besonders bevorzugt herausgestellt.

Ein weiterer Aspekt der Erfindung betrifft ein Verbundmaterial umfassend ein Fasermaterial, das Pflanzenfasermaterial und ein Verstärkungsfasermaterial aufweist, und ein Bindemittel, wobei der Anteil des Verstärkungsfasermaterials wenigstens 5 Gew.-% und höchstens 50 Gew.-%, bezogen auf das Gesamtgewicht des Fasermaterials, beträgt. Das Verbundmaterial kann, wie das zuvor beschriebene Verbundmaterial ausgebildet sein, wobei das Bindemittel einen biologisch abbaubaren aufweisen kann oder nicht, Pflanzenfasermaterial der Ordnung der Poales gemäß dem diesbezüglichen Aspekt der Erfindung aufweisen kann oder nicht, rezykliertes Fasermaterial gemäß dem diesbezüglichen Aspekt der Erfindung aufweisen kann oder nicht, Holzfasermaterial gemäß dem diesbezüglichen Aspekt der Erfindung aufweisen kann oder nicht, den Hauptfaseranteil gemäß dem entsprechenden Aspekt der Erfindung aufweisen kann oder nicht, den Kurzfaseranteil gemäß dem entsprechenden Aspekt der Erfindung aufweisen kann oder nicht, den Langfaseranteil gemäß dem entsprechenden Aspekt der Erfindung aufweisen kann oder nicht und/oder gefärbtes Fasermaterial gemäß dem diesbezüglichen Aspekt der Erfindung aufweisen kann oder nicht. Wesentlich bei diesem Aspekt der Erfindung ist lediglich der Einsatz eines Verstärkungsfasermaterials zu einem Anteil von wenigstens 5 Gew.-% und höchstens 50 Gew.-% bezogen auf das Gesamtgewicht des Fasermaterials. Es hat sich als vorteilhaft herausgestellt, das Verstärkungsfasermaterial aus der Gruppe bestehend aus synthetischem Fasermaterial, Polyamidfasermaterial, insbesondere Polyesterfasermaterial, Polyacrylfasermaterial, Elastanfasermaterial, tierischem Fasermaterial, insbesondere Lederfasermaterial, Seidenfasermaterial und/oder Wollfasermaterial, oder Mischungen von zwei oder mehr davon, auszuwählen. Beispielsweise hat sich die Beimischung von Elastanfasermaterial als bevorzugt herausgestellt, um die Flexibilität des daraus entstehenden Verbundmaterials zu erhöhen. Die Beimischung von Polyesterfasermaterial hat sich als vorteilhaft erwiesen, um dem Verbundmaterial eine gewisse Reißfestigkeit zu verleihen. Die Beimischung von Lederfasermaterial hat sich beispielsweise als vorteilhaft herausgestellt, um dem Verbundmaterial die Haptik von klassischem Lederfasermaterial zu verleihen. Beispielsweise können die Lederfasern zerkleinertes Leder und Falzspäne umfassen. Insbesondere können Lederfasern verwendet werden, die bei der Vorgerbung (wet blue, wet white, usw.), dem Crust oder fertigem Leder bei den typischen Arbeitsgängen, insbesondere Falzen, Beschneiden, Spalten, Schleifen, Stanzen, anfallen. Beispielsweise können die Lederfasern von Stanzresten gegerbter Leder, Chromfalzspänen oder Aldehydfalzspänen stammen und/oder beispielsweise auch aus Lederfaserstoffschleifstaub gewonnen werden. Der gleiche Vorteil hinsichtlich der Haptik ergibt sich beim Einsatz von Seidenfasermaterial und/oder Wollfasermaterial, um dem Verbundmaterial die Haptik entsprechender tierischer Wolle und/oder Seide zu verleihen.

Vorzugsweise beträgt der Verstärkungsmaterialanteil wenigstens 10 Gew.-%, 15 Gew.-% oder 20 Gew.-% und/oder höchstens 50 Gew.-%, 40 Gew.-%, 35 Gew.-% oder 30 Gew.-%, besonders bevorzugt zwischen 20 Gew.-% und 30 Gew.-%, bezogen auf das Gesamtgewicht des Fasermaterials.

Es hat sich herausgestellt, dass der erfindungsgemäße Gewichtsprozentanteil sowie die zuvor genannten bevorzugten Gewichtsprozentanteile des Verstärkungsfasermaterials dahingehend einen guten Kompromiss darstellen, dass sie einerseits groß genug sind, um dem Verbundmaterial die gewünschte Eigenschaft zu verleihen und andererseits so klein sind, dass ein großer Anteil an pflanzlichen Fasern in dem Verbundmaterial eingesetzt werden kann, was dessen ökologische Verträglichkeit erhöht.

Die Erfindung betrifft ferner ein flächiges, insbesondere bahnförmiges, Erzeugnis, dass das Verbundmaterial eines oder mehrere der zuvor beschriebenen Aspekte der Erfindung umfasst. Vorzugsweise beträgt der Anteil des Verbundmaterials in dem Erzeugnis wenigstens 20 Gew.-%, 30 Gew.-%, 40 Gew.-%, 50 Gew.-%, 60 Gew.-%, 70 Gew.-%, 80 Gew.-%, 90 Gew.-%, 95 Gew.-%, 99 Gew.-% oder 100 Gew.-% des Erzeugnisses.

Unter einem flächigen Erzeugnis ist insbesondere ein Erzeugnis zu verstehen, dessen Längsstreckung und Breitenerstreckung deutlich größer ist als dessen Höhenerstreckung. Unter deutlich größer ist insbesondere zu verstehen, dass die Längserstreckung und/oder die Breitenerstreckung um wenigstens das dreifache, fünffache, zehnfache, zwanzigfache, dreißigfache oder fünfzigfache größer ist als die Breitenerstreckung. Insbesondere definieren die Längserstreckung und die Breitenerstreckung des flächigen Erzeugnisses eine planare Oberfläche des Erzeugnisses, die gebogen oder gerade sein kann. Insbesondere kann das flächige Erzeugnis ein bahnförmiges Erzeugnis sein. Unter einem bahnförmigen Erzeugnis ist insbesondere ein flächiges Erzeugnis zu verstehen, dessen Längserstreckung größer, insbesondere wenigstens doppelt so groß, dreifach so groß, fünffach so groß oder zehnfach so groß ist, wie dessen Breitenerstreckung. Die Längserstreckung des bahnförmigen Erzeugnisses kann auch als Bahnerstreckung bezeichnet werden. Die Bahnerstreckung kann insbesondere endlos sein. Insbesondere kann ein bahnförmiges Erzeugnis auf eine Rolle gewickelt sein. Alternativ kann ein bahnförmiges Erzeugnis in Platten geschnitten werden. Insbesondere kann das Erzeugnis eine Faserbahn sein. Unter einer Faserbahn ist insbesondere ein Erzeugnis zu verstehen, das an sich gegenüberliegenden Oberflächen, insbesondere der sich gegenüberliegenden planaren Oberflächen und/oder sich gegenüberliegender Kanten, Fasermaterial aufweist. Insbesondere ist unter einer Faserbahn ein Erzeugnis zu verstehen, dass von Fasermaterial durchsetzt ist und/oder in dem das Fasermaterial homogen verteilt ist. Unter "durchsetzt" ist insbesondere zu verstehen, dass sich das Fasermaterial entlang der gesamten Dicke, Länge und/oder Breite des Erzeugnisses verteilt, insbesondere homogen verteilt.

Die Höhenerstreckung des flächigen Erzeugnisses kann auch als Stärke bezeichnet werden. Vorzugsweise umfasst das flächige Erzeugnis eine Stärke zwischen 0,2 mm und 7 mm, besonders bevorzugt zwischen 0,3 mm und 5 mm, insbesondere zwischen 0,5 mm und 3 mm. Alternativ oder zusätzlich weist das Erzeugnis eine Stärke von wenigstens 0,3 mm, 0,5 mm oder 1 mm und/oder von höchstens 10 mm, 8 mm, 7 mm, 6 mm, 5 mm, 4 mm oder 3 mm auf.

Vorzugsweise weist das Erzeugnis bei der Verwendung als Beschichtung, insbesondere von Paneelen, oder als Belag, insbesondere als Tapete, eine Stärke zwischen 0,2 mm und 5 mm, insbesondere 0,3 mm und 3 mm, besonders bevorzugt zwischen 0,5 mm und 1 mm auf. Alternativ dazu weist das Erzeugnis insbesondere bei der Verwendung zur Herstellung von Überzugsmaterial, insbesondere von Kissenbezügen, Sitzbezügen, Abdeckungen von Sitzrückschalen, und Modeaccessoires insbesondere eine Stärke zwischen 0,5 mm und 2 mm, vorzugsweise zwischen 0,8 mm und 1,4 mm auf. Alternativ dazu weist das Erzeugnis insbesondere bei dessen Verwendung für Hinterkappen eine Stärke zwischen 0,5 mm und 3 mm, vorzugsweise zwischen 0,8 mm und 2,5 mm auf. Bei Lauf- und Brandsohlen weist das Erzeugnis insbesondere eine Stärke zwischen 1,5 mm und 5 mm, vorzugsweise zwischen 1,8 mm und 4 mm, auf. Bei Rahmen und Absätzen weist das Erzeugnis insbesondere eine Stärke zwischen 1 mm und 8 mm, vorzugsweise zwischen 2 mm und 7 mm auf. Bei Wandelementen, wie Raumtrennern, weist das Erzeugnis insbesondere eine Stärke zwischen 2 mm und 8 mm, vorzugsweise zwischen 3 mm und 7 mm, zwischen 4 mm und 7 mm, zwischen 5 mm und 7 mm oder zwischen 6 mm und 7 mm, auf.

In einer bevorzugten Ausführung weist das Erzeugnis gefärbtes Fasermaterial, insbesondere gemäß dem diesbezüglichen Aspekt der Erfindung, auf, wobei das Erzeugnis von dem gefärbten Fasermaterial durchsetzt ist, insbesondere gleichmäßig durchsetzt ist, und/oder wobei das Fasermaterial homogen in dem Erzeugnis verteilt ist. Dies kann dadurch erzielt werden, dass, wie zuvor beschrieben, für die Herstellung des Verbundmaterials gefärbtes Fasermaterial verwendet wird, beispielsweise gefärbte Kämmlinge, Grundbaumwolle, Kardenrückstände, Schlichtfasern, Reißfasern und/oder Papierfasermaterial eingesetzt wird. Im Gegensatz zu lediglich oberflächlich gefärbten Erzeugnissen wird dadurch sichergestellt, dass auch an den Schnittflächen des flächigen Erzeugnisses die gefärbten Fasern sichtbar sind. Dies ist insbesondere bei Verwendungen des flächigen Erzeugnisses von Vorteil bei denen es für die entsprechende Verwendung zugeschnitten wird. Ohne die erfindungsgemäße Lösung müssten bei diesen Verwendungen die Schnittkanten separat eingefärbt werden, um eine Färbung aufzuweisen.

Darüber hinaus unterscheidet sich das erfindungsgemäße flächige Erzeugnis insbesondere dadurch von oberflächlich gefärbten Erzeugnissen, dass die Farbe der Fasern sich von der sonstigen Farbe der Oberfläche des Erzeugnisses unterscheiden kann. Dadurch wird eine authentische Recyclingoptik erzielt. Gemäß einer Ausführungsform weist das Bindemittel des Verbundmaterials keine oder eine andere Farbe auf als das gefärbte Fasermaterial. Alternativ oder zusätzlich wird die Oberfläche des flächigen Erzeugnisses mit einer anderen Farbe eingefärbt als die Farbe des gefärbten Fasermaterials.

Unter durchsetzt ist in diesem Kontext insbesondere zu verstehen, dass nicht nur die sich planar zur Oberfläche des Erzeugnisses erstreckten Fasern bzw. Faseranteile gefärbt sind, sondern auch die sich in Stärkenrichtung des Erzeugnisses erstreckenden Fasern gefärbt sind. Unter gleichmäßig durchsetzt ist insbesondere zu verstehen, dass nicht nur oberflächennahe gefärbte Fasern auch in Stärkenrichtung ein Stück weit gefärbt sind, sondern dass auch im Mittelbereich zwischen den Oberflächen des Erzeugnisses liegende Fasern gefärbt sind.

Vorzugsweise weist wenigstens eine Oberfläche des Erzeugnisses eine Beschichtung auf. Insbesondere ist die Beschichtung eine Farbschicht und/oder eine Schutzschicht, die insbesondere Polyurethan oder Polyacrylat aufweist. Alternativ oder zusätzlich ist die Oberfläche geprägt. Durch derartige Beschichtungen kann insbesondere die Oberfläche des Erzeugnisses veredelt werden, was dessen Anwendungsgebiete nochmals deutlich erweitert. Insbesondere kann beispielsweise durch eine Marmorierung der Oberfläche eine lederähnliche Optik erzeugt werden.

Die Erfindung betrifft ferner die Verwendung des zuvor beschriebenen Verbundmaterials mit einem oder mehreren der Erfindungsaspekte und/oder das zuvor beschriebene Erzeugnis zur
- Beschichtung, insbesondere Ummantelung oder Kaschierung, insbesondere von
   - Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
   - Einrichtungs- und Gebrauchsgegenständen, wie Möbeln, Dekorationen, Elektrogeräten und Handtaschen, insbesondere in der Modeindustrie, und/oder
- zur Herstellung von
   - Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
   - Wandelementen, wie Raumtrennern, insbesondere im Bereich von Fahrzeuginnenräumen, Wohnräumen und Gewerberäumen, von
   - Überzugsmaterial, wie Kissenbezüge, Sitzbezüge oder Abdeckungen, insbesondere von Sitzrückenschalen, insbesondere im Fahrzeuginnenbereich, von
   - Schuhkomponenten, insbesondere Hinterkappen, Absätzen, Lauf- und Brandsohlen, und/oder von
   - Modeaccessoires, Produkte zur Ausstattung von Verkehrsmitteln oder Bauprodukten.

Ferner betrifft die Erfindung für die zuvor beschriebenen Verwendungen hergestellte Erzeugnisse und/oder Beschichtungen.

Insbesondere bei Beschichtungen, Belägen und/oder Überzugsmaterial, insbesondere von Einrichtungs- und Gebrauchsgegenständen, kann die Prägung der Oberfläche zur Erzeugung einer lederähnlichen Optik, insbesondere in der Modeindustrie, vorteilhaft sein. Alternativ oder zusätzlich kann eine Textil-Prägung eingesetzt werden, die dem Erzeugnis insbesondere eine textilähnliche Optik, beispielsweise die eines Gewebes, verleiht. Alternativ oder zusätzlich kann eine technische Prägung, beispielsweise eine Carbonprägung, eingesetzt werden, die dem Erzeugnis die Optik eines Hochleistungsmaterials, wie Carbon, verleiht. Im Gegensatz dazu kann insbesondere bei der Ummantelung oder Kaschierung in Gewerberäumen das Verzichten auf eine Prägung sinnvoll sein, um das durch den Einsatz der Pflanzenfasern erzeugten "veganen", also pflanzenbasierten, Eindruck nicht zu beeinträchtigen.

Die Erfindung betrifft ferner ein Verfahren zur Herstellung eines Verbundmaterials gemäß einem oder mehreren der zuvor beschriebenen Erfindungsaspekte oder eines flächigen Erzeugnisses. Das Verfahren umfasst die Schritte:
a) Bereitstellen eines Fasermaterials, das Pflanzenfasermaterial umfasst;
b) Bereitstellen eines Bindemittels;
c) Vermengen des Bindemittels, des Fasermaterials und eines Fluids, insbesondere Wasser, zu einem Gemisch, insbesondere Faserbrei; und
d) Trocknen des Gemisches, um das Verbundmetarial zu erhalten.

Dabei kann Schritt a) insbesondere das Bereitstellen von Pflanzenfasermaterial der Ordnung Poales gemäß dem diesbezüglichen Aspekt der Erfindung aufweisen, das Bereitstellen von rezykliertem Pflanzenfasermaterial gemäß dem diesbezüglichen Aspekt der Erfindung aufweisen, das Bereitstellen von Holzfasermaterial gemäß dem diesbezüglichen Aspekt der Erfindung aufweisen und/oder das Bereitstellen von gefärbtem Pflanzenfasermaterial gemäß dem diesbezüglichen Aspekt der Erfindung aufweisen. Besonders bevorzugt umfasst das Bereitstellen von Pflanzenfasermaterial das Bereitstellen von Kämmlingen, Grundbaumwolle, Kardenrückständen, Schlichtfasern, Reißfasern, Papierfasermaterial und/oder Spelzfasermaterial, insbesondere in Form von Baumwolle, Holzfasermaterial und/oder Pflanzenfasermaterial der Gattung der Poales. Insbesondere beim Bereitstellen von Papierfasermaterial umfasst das Bereitstellen vorzugsweise das Bereitstellen von Nassfestmittel aufweisendes Papierfasermaterial. Ferner umfasst das Bereitstellen von Papierfasermaterial, insbesondere nassfestem Papierfasermaterial, das Zerfasern von Papier, insbesondere mittels Schneidmühle und/oder Refiner, insbesondere Kegelrefiner oder Scheibenrefiner. Alternativ oder zusätzlich kann das Bereitstellen von Fasermaterial ferner das Bereitstellen von Pflanzenfasermaterial und einem Verstärkungsfasermaterial gemäß dem diesbezüglichen Aspekt der Erfindung aufweisen.

Insbesondere bei Ausführungsformen, bei denen das Pflanzenfasermaterial gefärbtes Fasermaterial aufweist, ist es von Vorteil, Pflanzenfasermaterial zu verwenden, das aus gefärbten Produktionsrückständen, wie Kämmlingen, Schlichtfasern oder Kardenrückständen, und/oder gefärbten Sekundärrohstoffen, wie gefärbten Reißfasern und/oder gefärbtem Altpapierstoff, bereitgestellt wird.

Schritt c) kann das Zerkleinern des Fasermaterials auf einen gewünschten Faserlängenbereich, insbesondere gemäß den Aspekten hinsichtlich des Hauptfaseranteils, Kurzfaseranteils und/oder Langfaseranteils, umfassen. Dabei kann das Zerkleinern insbesondere ein Zerkleinern mittels einer Schneidmühle, insbesondere Feinschneidmühle, und/oder mittels eines Refiners, insbesondere Scheibenrefiners und/oder Kegelrefiners, umfassen. Es hat sich herausgestellt, dass der erfindungsgemäße Einsatz von Pflanzenfasern die notwendige Verarbeitungszeit im Refiner (im Stand der Technik 2 - 10 Stunden) gegenüber Lederfasern reduzieren kann, insbesondere auf 30 bis 50 Minuten. Für die Zerkleinerung im Refiner kann ein Gewichtsverhältnis von 2 - 5 Gew.-% Fasermaterial zu 95 - 98 Gew.-% Wasser zielführend sein. Schritt c) kann das Vermengen des Bindemittels mit dem Fasermaterial vor, nach oder während dem Zerkleinern umfassen.

Insbesondere umfasst Schritt c) das Vermengen des Bindemittels, des Fasermaterials und von Fluid zu einem Gemisch, insbesondere Faserbrei. Sofern vorab das Fasermaterial im Refiner zerkleinert wurde, kann das Fasermaterial bereits mit Wasser vermengt sein, sodass dem Gemisch nur noch das Bindemittel zugefügt werden muss.

Schritt c) kann ferner das Zugeben zumindest eines Additivs umfassen, das eines oder mehrere der im Vorangehenden im Detail beschriebenen Additive sein kann. Das Vermischen gemäß Schritt c) kann insbesondere in einer Mischvorrichtung, wie einer Bütte, erfolgen. Das Gewichtsverhältnis von Wasser zu Fasermaterial kann hierbei eines sein, das ausgewählt ist aus der Gruppe, bestehend aus 10:1 bis 100:1, 15:1 bis 75:1 oder 20:1 bis 50:1, beispielsweise 40:1.

Das Gemisch, das in Schritt c) erhalten wird, kann ein Faserbrei sein, der durch gemeinsames Mahlen des Fasermaterials und des Wassers, beispielsweise mittels eines Refiners, erhalten werden kann. Der Faserbrei kann auch als Stoffbrei bezeichnet werden.

Das in Schritt c) erhaltene Gemisch wird mit dem Bindemittel und optional mit einem oder mehreren der im Vorangehenden beschriebenen Additive, versetzt, beispielsweise chargenweise versetzt.

Es kann vorgesehen sein, dass ein Gewichtsverhältnis von Fasermaterial zu Bindemittel in einem Bereich zwischen 1:1 bis 3:1, besonders bevorzugt zwischen 1:1 bis 2.5:1, insbesondere 2:1 bis 1,1:1, ist.

Als Bindemittel kann in Schritt b) eines oder mehrere der im Vorangehenden im Detail beschriebenen Bindemittel, etwa ein Bindemittel, das Naturkautschuk umfasst, bereitgestellt werden. Es kann vorgesehen sein, dass das Bindemittel in Form einer Suspension, Dispersion, Emulsion etc. zugegeben wird, beispielsweise in Form einer Emulsion, umfassend das Bindemittel und ein geeignetes Emulsionsmittel, mit einem Feststoffgehalt von 40 bis 60 Gew.-%, insbesondere 43.5 bis 55 Gew.-%, beispielsweise 43.5 Gew.-% bis 44.5 Gew.-%.

Es kann vorgesehen sein, dass das Fettungsmittel, eines ist (oder ein solches umfasst, das ausgewählt ist aus der Gruppe, bestehend aus einem oder mehreren Triglyceridestern mit langkettigen (> 10 Kohlenstoffatome) gesättigten und/oder einfach oder mehrfach ungesättigten Fettsäuren, wobei die Triglyceridester sowohl pflanzlicher oder tierischer Herkunft sein können, und/oder sulfatierter natürlicher Öle. Es kann hierbei vorgesehen sein, dass das Gewichtsverhältnis von Fasermaterial zu Fettungsmittel eines ist, das ausgewählt ist aus der Gruppe, bestehend aus 3:1 bis 20:1; 5:1 bis 15:1; 8:1 bis 13:1; 9:1 bis 11:1; insbesondere etwa 10:1.

Beispielsweise dann, wenn das Fasermaterial Lederfasern umfasst, kann vorgesehen sein, dass der Gerbstoff oder Nachgerbstoff ein als (Nach-) Gerbstoff-geeignetes Pflanzenextrakt ist, beispielsweise ein Quebracho-Extrakt ist. Es kann hierbei vorgesehen sein, dass das Gewichtsverhältnis von Lederfasermaterial zu Gerbstoff eines ist, das ausgewählt ist aus der Gruppe, bestehend aus 2:1 bis 12:1; 3:1 bis 10:1; 4:1 bis 9:1; 5:1 bis 8:1; 6:1 bis 7:1; insbesondere etwa 6,7:1; beispielsweise etwa 6,66:1.

Es kann vorgesehen sein, dass das anorganische Salz Aluminiumsulfat ist. Es kann hierbei vorgesehen sein, dass das Gewichtsverhältnis von Fasermaterial zu anorganischem Salz eines ist, das ausgewählt ist aus der Gruppe, bestehend aus 2:1 bis 10:1; 3:1 bis 8:1; 4:1 bis 7:1; 5:1 bis 6:1; insbesondere etwa 5,5:1; beispielsweise etwa 5,54:1.

Es kann vorgesehen sein, dass das in Schritt c) erhaltene Gemisch vor dem Schritt d) für einen Zeitraum von etwa zwei Stunden gerührt wird.

Das Trocknen des in Schritt c) erhaltenen Gemischs, d.h. Schritt d) des Verfahrens, kann einen Schritt des Entwässerns umfassen. Das Entwässern kann insbesondere durch Aufbringen des in Schritt c) erhaltenen Gemischs auf ein Siebband durchgeführt werden. Der Entwässerungsprozess kann durch Anlegen eines Vakuums, durch Abpressen und andere geeignete Verfahrensschritte unterstützt werden.

Das Trocknen des in Schritt c) erhaltenen Gemischs, d.h. Schritt d) des Verfahrens, kann einen Trocknungsschritt bei erhöhter Temperatur umfassen, insbesondere einen Trocknungsschritt bei erhöhter Temperatur, der dem Entwässern nachgelagert ist. Der Trocknungsschritt bei erhöhter Temperatur kann durch Zufuhr von Warmluft durchgeführt werden, um das zu trocknende Gemisch auf eine Temperatur von beispielsweise 50 bis 100°C, etwa 80 °C, zu erhitzen.

Das Trocknen des Faserbreis gemäß Schritt d) umfasst insbesondere ein Trocknen, bis der Wassergehalt des Verbundmaterials derart reduziert ist, dass das Verbundmaterial auf eine Rolle gewickelt, in Platten geschnitten und/oder vor Verderbnis, insbesondere Schimmel, geschützt werden kann. Es hat sich herausgestellt, dass ein Restwassergehalt von 3 bis 20 Gew.-% für die zuvor genannten Faserarten für diese Zwecke zielführend ist. Insbesondere hat sich gezeigt, dass bei Lederfasern ein Restwassergehalt von maximal 15 Gew.-%, insbesondere von maximal 13 oder 12 Gew.-%, das Verbundmaterial vor Verderbnis schützt. Bei Pflanzenfasern, insbesondere bei Baumwolle, hat sich ein Restwassergehalt von maximal 10 Gew.-% als zielführend für den Schutz vor Verderbnis erwiesen.

Es kann sein, dass dem Gemisch, insbesondere in Schritt c), ein Fällungsmittel, insbesondere Aluminiumsulfat oder andere Salze von mehrwertigen Kationen, wie Kalzium und Magnesium, zugeführt.

Zuvor und nachfolgend gemachte Gew.-% Angaben beziehen sich insbesondere auf Gew.-% der Referenzgröße, beispielsweise des Fasermaterials oder des Verbundmaterials, im getrockneten Zustand. Unter dem getrockneten Zustand ist insbesondere der Zustand des Verbundmaterials nach dem Trocknen zu verstehen. Alternativ können die Gew.-% Angaben auf sämtliche Bestandteile des Verbundmaterials, abgesehen von Wasser, vor deren Verarbeitung zu Verbundmaterial bezogen sein. So können bei einem Verbundmaterial, das ausschließlich aus Fasermaterial, Bindemittel und Wasser besteht, Gewichtsangaben bezogen auf das Gesamtgewicht des Verbundmaterials insbesondere dahingehend verstanden werden, dass das Gesamtgewicht des Verbundmaterials aus der Summe des Gewichts des Fasermaterials und des Bindemittels, also ohne den Wasseranteil, insbesondere ohne den zuvor beschriebenen Restwassergehalt, gebildet wird.

Vorzugsweise umfasst Schritt d) folgende Unterschritte:
d1) Überführen des Gemisches, insbesondere Faserbreis, in einen flächigen, insbesondere bahnförmigen Zustand, und
d2) Trocknen des Gemisches, um ein wickelbares und/oder stapelbares Erzeugnis zu erhalten.

Schritt d1) umfasst vorzugsweise das Fördern, insbesondere mittels Pumpen, des Faserbreis auf eine Langsiebentwässerungsmaschine (Foudrinier-Anlage). Schritt d2) umfasst insbesondere wenigstens einen mechanischen (Entwässerung) und/oder einen thermischen (bei erhöhter Temperatur) Trocknungsschritt, insbesondere wie zuvor beschrieben. Ein mechanischer Trocknungsschritt kann insbesondere über die Langsiebentwässerungsmaschine erfolgen. Diese umfasst insbesondere ein Endlosförderband mit Durchtrittsöffnung, über die im Gemisch enthaltenes Fluid, insbesondere Wasser, abtropfen, insbesondere entwässern, kann. Die Langsiebentwässerungsmaschine kann eine Keilpresse aufweisen, mit der über eine sich in Förderrichtung verjüngende Keilform die Stärke des Faserbreis durch Komprimierung verringert und das Wasser ausgepresst wird. An die Keilpresse können weitere Pressvorrichtungen anschließen, um den Faserbrei weiter zu entwässern. An derartige Pressvorrichtungen können thermische Trockenvorrichtungen anschließen, um den Faserbrei weiter zu trocknen, bis das gewünschte wickelbare und/oder stapelbare Erzeugnis vorliegt.

Insbesondere durch eine Abfolge, wonach zunächst eine insbesondere größtmögliche mechanische und anschließend eine thermische Trocknung erfolgt, kann der Energieaufwand für die Trocknung reduziert werden, was die Nachhaltigkeit des Verfahrens steigert.

In einer weiteren Ausführungsform umfasst das Verfahren ferner einen oder mehrere der folgenden Schritte:
e) Auftragen einer Beschichtung, insbesondere Farbschicht und/oder Schutzschicht, insbesondere umfassend Polyurethan oder Polyacrylat, auf wenigstens eine Oberfläche des Erzeugnisses; und/oder
f) Prägen von wenigstens einer Oberfläche des Erzeugnisses; und/oder
g) Bearbeiten des Erzeugnisses mit einer Stollmaschine.

Durch das Auftragen der Beschichtung und/oder der Prägung können die zuvor beschriebenen Vorteile erzielt werden. Durch Bearbeitung mit einer Stollmaschine gemäß Schritt g) kann insbesondere die Weichheit und/oder Flexibilität des entstehenden Verbundmaterials erhöht werden.

Vorzugsweise kann das zuvor und nachfolgend beschriebene Verfahren so ausgeführt werden, dass ein Verbundmaterial oder ein flächiges Erzeugnis gemäß einem oder mehreren der zuvor beschriebenen Aspekte der Erfindung herstellbar ist. Ferner kann das Verbundmaterial und/oder das flächige Erzeugnis gemäß einem oder mehreren der zuvor beschriebenen Aspekte der Erfindung so ausgebildet sein, dass es mit den zuvor und/oder nachfolgend beschriebenen Verfahren erzeugt werden kann.

Ein weiterer Aspekt betrifft ebenfalls ein Verfahren zum Herstellen eines Verbundmaterials oder eines flächigen Erzeugnisses, das folgende Schritte umfasst:
a) Bereitstellen eines Fasermaterials, das Pflanzenfasermaterial umfasst;
b) Bereitstellen eines Bindemittels;
c) Vermengen des Bindemittels, des Fasermaterials und eines Fluids, insbesondere Wasser, zu einem Gemisch, insbesondere Faserbrei; und
d) Trocknen des Gemisches, um das Verbundmetarial zu erhalten.

Das Verfahren kann wie das zuvor beschriebene Verfahren ausgeführt werden. Wesentlich ist bei diesem Verfahren jedoch lediglich, dass Schritt a) das Bereitstellen von Pflanzenfasermaterial in Form von Produktionsrückständen und/oder Sekundärstoffen umfasst. Vorzugsweise sind die Produktionsrückstände und/oder Sekundärrohstoffe aus Kämmlingen, Grundbaumwolle, Kardenrückständen, Schlichtfasern, Reißfasern, Papierfasermaterial und/oder Spelzfasermaterial, insbesondere wie zuvor beschrieben, ausgewählt. Besonders bevorzugt werden die Produktionsrückstände und/oder Sekundärrohstoffe aus Baumwollfasermaterial, Holzfasermaterial und/oder Pflanzenfasermaterial der Gattung der Poales ausgewählt. Dabei kann das Fasermittel und/oder das Bindemittel gemäß einem oder mehreren der zuvor beschriebenen Aspekten der Erfindung ausgewählt werden. Besonders bevorzugt werden die Reißfasern aus Textilien gewonnen, die aus Kleidung, insbesondere Jeansstoffen, Bezügen, Polstermöbeln, Vorhängen, Handtüchern, Bettwäsche, Tischdecken und/oder Putz- und Reinigungstüchern ausgewählt sind.

Besonders bevorzugt umfassen, insbesondere bestehen, die Kämmlinge, Grundbaumwolle, Kardenrückstände, Schlichtfasern und/oder Reißfasern Baumwolle, insbesondere mit dem zuvor beschriebenen Hauptfaseranteil, Kurzfaseranteil und/oder Langfaseranteil. Ferner sind die Kämmlinge, Grundbaumwolle, Kardenrückstände, Schlichtfasern und/oder Reißfasern bevorzugt gefärbt, insbesondere indigogefärbt. Ferner werden die Produktionsrückstände vorzugsweise aus der Weberei von Jeansstoffen gewonnen.

Alternativ oder zusätzlich handelt es sich beim Papierfasermaterial um Papierfasermaterial, das aus Papierbehältern, insbesondere aus To-Go-Bechern, insbesondere Kaffeebechern, To-Go-Tellern, Strohhalmen oder ähnlichen Einwegprodukten aus Papier gewonnen werden. Ferner kann es sich alternativ oder zusätzlich beim Papierfasermaterial um aus Papierverpackungen, wie Lebensmittelverpackungen, oder aus Papierblättern, wie Papier aus Zeitungen, Schreibpapier oder Papier aus Büchern, gewonnenen Papierfasermaterial handeln. Insbesondere wird das Papierfasermaterial durch Zerkleinerung derartiger Gegenstände, insbesondere in einer Schneidmühle und/oder in einem Refiner, in das Papierfasermaterial überführt.

Im Folgenden soll die Erfindung unter Bezugnahme auf Ausführungsbeispiele im Detail beschrieben werden. Die Erfindung ist jedoch nicht auf diese Ausführungsbeispiele beschränkt, wobei einzelne Merkmale der Ausführungsbeispiele zusammen mit anderen Merkmalen oder Merkmalen der vorangehenden allgemeinen Offenbarung der Erfindung der Verwirklichung der Erfindung dienen können.

### Beispiel 1:

Baumwollschlichtfäden aus der Bekleidungsindustrie (Hersteller: WSR Advanced Raw Materiales GmbH; Produktnummer: 449S1G; blau; hart, gemahlen, Faserlänge < 15mm) wurden im trockenen Zustand unter Verwendung einer Schneidmühle zerkleinert, um ein entsprechendes Fasermaterial zu erhalten. 400 kg der zerkleinerten Baumwollschlichtfäden wurden anschließend mit 16.000 L Wasser in einer Bütte vermengt, um ein Mischverhältnis von Wasser zu Fasermaterial von 40/1 zu erhalten, und anschließend mittels eines Scheibenrefiners zu einem Faserbrei vermahlen. Eine Stichprobe des Faserbreis, die mittels Dynamischer Bildanalyse gemäß ISO 13322-2:2006 gemessen wurde wies folgende Faserlängenverteilung auf:

| Faserlängenbereich [mm] | < 0,1 | 0,1 0,2 | 0,2 0,5 | 0,5 1,0 | 1,0 - 1,5 | 1,5 2,0 | 2,0 3,0 | 3,0 4,0 | 4,0 5,0 | > 5,0 |
|---|---|---|---|---|---|---|---|---|---|---|
| Volumenanteil [%] | 15 | 10 | 20 | 25 | 11 | 9 | 6,5 | 2,5 | 0,7 | 0,3 |

Der so erhaltene Faserbrei wurde mit 153 kg Bindemittel (Latexaufbereitung, Full Ammonia Latex "Standard Malaysian/Vietnamese Rubber" 60% DRC gemäß ISO 2004), 40 kg Fettungsmittel (Polyol CT 688, Smit&Zoon) und 70 kg Aluminiumsulfat als Koagulationsmittel versetzt. Anschließend wurde der Faserbrei auf einer Langsiebentwässerungsmaschine entwässert und anschließend in einer Keilpressmaschine weiter entwässert. Anschließend wurde der Faserbrei in einem Trockenkanal unter Zufuhr von Warmluft bei 80°C getrocknet, bis ein wickelbares und stapelbares flächiges Erzeugnis mit einer Stärke von 1 mm bereitgestellt war. Das Erzeugnis konnte auf Rollen gewickelt oder in Platten geschnitten werden. Außerdem konnte das Erzeugnis weiter veredelt werden, beispielsweise durch das Auftragen einer Farbschicht und das Prägen der Oberfläche sowie die Bearbeitung mit einer Stollmaschine.

Unter den Prüfbedingungen gemäß DIN 53121 (Biegewinkel 7°; Biegegeschwindigkeit 6,0 °/s; Vorkraft 0,02 N; Biegelänge 10,0 mm; Probenbreite 30,0 mm) wurde bei Beispiel 1 eine Biegekraft von 1300 mN gemessen. Des Weiteren wurde für Beispiel 1 bei einer Temperatur von 40°C und einer Luftfeuchtigkeit von 80% eine Wasserdampfspeicherfähigkeit von 8 - 10 Gew.-%, insbesondere von 100 g/m² des Erzeugnisses, nachgewiesen.

### Beispiele 2 und 3:

Weitere Beispiele 2 und 3 wurden wie Beispiel 1 durchgeführt mit der einzigen Ausnahme, dass anstelle der Schlichtfäden für Beispiel 2 aus Jeans gewonnene Reißbaumwolle mit der Produktnummer 10348 des Unternehmens ALTEX Textil-Recycling und für Beispiel 3 die Reißbaumwolle mit der Produktnummer 11106 des Unternehmens des Unternehmens ALTEX Textil-Recycling genutzt wurde. Die Beispiele wiesen vergleichbare Eigenschaften hinsichtlich Wasserdampfspeicherfähigkeit und Biegsamkeit auf. Eine Besonderheit bei Beispiel 2 bestand darin, dass die eingesetzten Fäden aus ihrer vorherigen Nutzung für Jeansstoffe in dem klassischen Indigo blau gefärbt waren, wodurch man dem Verbundmaterial seinen Ursprung aus recycelten Jeansstoffen ansah.

### Beispiel 4:

Produktionsrückstände in Form von beschichtetem Papierverschnitt aus der Produktion von Papierbechern gemäß Gruppe 5.14.01 der DIN EN 643:2014 - 11 (BASF) wurden im trockenen Zustand unter Verwendung einer Schneidmühle zerkleinert, um ein entsprechendes Papierfasermaterial zu erhalten. 200 kg des zerkleinerten Papierfasermaterials wurde anschließend mit 200 kg Kaffeesatz als Aromaträger und 16.000 L Wasser in einer Bütte vermengt, um ein Mischverhältnis von Wasser zu Fasermaterial von 40/1 zu erhalten, und anschließend mittels eines Scheibenrefiners zu einem Faserbrei vermahlen. Der so erhaltene Faserbrei wurde mit 138 kg Bindemittel (Latexaufbereitung, Full Ammonia Latex "Standard Malaysian/Vietnamese Rubber" 60% DRC gemäß ISO 2004) und 70 kg Aluminiumsulfat als Koagulationsmittel versetzt. Anschließend wurde der Faserbrei, wie für Beispiel 1 beschrieben, in ein flächiges Erzeugnis mit einer Stärke von 1 mm überführt.

Unter den Prüfbedingungen gemäß DIN 53121 (Biegewinkel 7°; Biegegeschwindigkeit 6,0 °/s; Vorkraft 0,02 N; Biegelänge 10,0 mm; Probenbreite 30,0 mm) wurde bei Beispiel 4 eine Biegekraft von 1200 mN gemessen. Des Weiteren wurde für Beispiel 4 bei einer Temperatur von 40°C und einer Luftfeuchtigkeit von 80% eine Wasserdampfspeicherfähigkeit von 8 bis 10 Gew.-%, insbesondere von 100 g/m² des Erzeugnisses, nachgewiesen.

### Vergleichsbeispiel 1:

Vegetabilleder, Aldehydfalzspäne und Chromfalzspäne wurden jeweils im trockenen Zustand zerkleinert, um ein entsprechendes Fasermaterial zu erhalten. Anschließend wurde 198 kg Fasermaterial aus Vegetabilleder, 79 kg Fasermaterial aus Aldehydfalzspänen, 467 kg aus Chromfalzspänen und 47 kg Lederfaserstoffschleifstaub (fällt beim Schleifen der Oberflächen von Lederfaserprodukten als Produktionsrückstand an) in einer Bütte mit 11000 L Wasser vermengt und anschließend mittels eines Scheibenrefiners zu einem Faserbrei vermahlen. Der so erhaltene Faserbrei wurde mit 38 kg einer Rußpigmentdispersion (Euronylschwarz HS 20192, Fa. Scholz), 408 kg Bindemittel (Latexaufbereitung, Full Ammonia Latex "Standard Malaysian/Vietnamese Rubber" 60% DRC gemäß ISO 2004), 142 kg Fettungsmittel (Polyol CT 688, Smit&Zoon), 119 kg vegetabilem Gerbstoff (Quebracho-Extrakt, Otto Dille), 120 kg Aluminiumsulfat als Koagulationsmittel und 150 kg Blähgraphit als Flammschutzmittel (ES 250 B5, Kropfmühl) versetzt. Anschließend wurde der Faserbrei, wie für Beispiel 1 beschrieben, in ein flächiges Erzeugnis mit einer Stärke von 1 mm überführt.

Unter den Prüfbedingungen gemäß DIN 53121 (Biegewinkel 7°; Biegegeschwindigkeit 6,0 °/s; Vorkraft 0,02 N; Biegelänge 10,0 mm; Probenbreite 30,0 mm) wurde bei Vergleichsbeispiel 1 eine Biegekraft von 743 mN gemessen. Des Weiteren wurde für Vergleichsbeispiel 1 bei einer Temperatur von 40°C und einer Luftfeuchtigkeit von 80% eine Wasserdampfspeicherfähigkeit von 15 Gew.-% nachgewiesen.

Wie aus dem Vergleich der Beispiele 1 und 4 mit Vergleichsbeispiels 1 ersichtlich ist, können mit den erfindungsgemäßen Verbundmaterialien, die Pflanzenfasern aufweisen, vergleichbare mechanische Eigenschaften, wie mit Lederfasern, erzielt werden. Auch wenn die gemessene Biegekraft bei dem Biegeversuch mit Pflanzenfasern aufweisenden Verbundmaterialien etwas höher und die Wasserdampfspeicherfähigkeit etwas geringer ist als bei Verbundmaterialien mit Lederfasern haben sich die erzielten Werte als ausreichend für die zuvor beschriebenen Einsatzgebiete erwiesen. Insbesondere wurde gezeigt, dass mit den erfindungsgemäßen Verbundmaterialien wickelbare Erzeugnisse hergestellt werden können, die, wie Verbundmaterialien mit Lederfasern, effizient gelagert, transportiert und weiterverarbeitet werden können. Insbesondere konnten die Erzeugnisse dank der hervorragenden Biegsamkeit ohne Bruchgefahr und/oder großen Kraftaufwand auf Rollen mit relativ kleinen Wickelkernen, insbesondere mit einem Durchmesser von 72 mm, gewickelt werden. Dadurch kann der lager- und transportkostenintensive Einsatz von Rollen mit einem großen Durchmesser, beispielsweise von 200 mm, viermieden werden. Darüber hinaus hat sich die erzielte Biegsamkeit insbesondere für den Einsatz als Beschichtung, Belag und Überzugsmaterial als zufriedenstellend herausgestellt.

Ferner wiesen die gemäß den Beispielen 1 bis 4 hergestellten Verbundmaterialien ein nicht-thermoplastisches Verhalten auf, waren insbesondere durch Erhitzen nach dem Trocknen nicht besser verformbar. Zudem erwiesen sich die so hergestellten Verbundstoffe als sehr emissionsarm im Hinblick auf verschiedene Tests, etwa Gesamtemission nach VDA 277 oder VDA 278; Fog-Wert, Gesamtemission nach AgBB/DIN EN ISO 16000; und TVOC 3d (total volatile organic compound; 3 Tage) Emission. Sowohl das nicht-thermoplastische Verhalten als auch die geringe Emission konnten besonders ausgeprägt gegenüber solchen Verbundmaterialien beobachtet werden, in denen aus dem Stand der Technik bekannte Styrol-Acrylat-basierte Bindemittel, etwa der Acronal-Reihe, BASF, verwendet wurden.

Vergleichbare Ergebnisse wie in Beispiel 1 wurden auch durch den Einsatz von Fasermaterial der Ordnung der Poales, insbesondere Spelzfasermaterial, anstelle von Baumwollschlichtfäden erreicht. Entsprechende Verbundmaterialien wie für Beispiel 1 beschrieben konnten hergestellt werden, mit der einzigen Ausnahme, dass 400 kg Spelzfasermaterial anstelle von 400 kg Baumwollschlichtfäden eingesetzt wurde. Durch Substitution von 5 bis 50 Gew.-% der Baumwollschlichtfäden in Beispiel 1 durch Lederfasermaterial, insbesondere durch Lederfasermaterial wie in Vergleichsbeispiel 1 genutzt, konnten die Eigenschaften des Verbundmaterials noch weiter an die von klassischen Lederfaserstoffen angenähert werden. Entsprechende Verbundmaterialien wie für Beispiel 1 beschrieben konnten hergestellt werden, mit der einzigen Ausnahme, dass beispielsweise 100 kg Baumwollschlichtfäden durch 100 kg Chromfalzspäne ersetzt werden.

Die in der vorstehenden Beschreibung und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Verbundmaterial, umfassend ein Fasermaterial, das Pflanzenfasermaterial aufweist, und ein Bindemittel, wobei das Pflanzenfasermaterial wenigstens teilweise aus Produktionsrückständen und/oder Sekundärrohstoffen gewonnen ist.

2. Verbundmaterial nach Anspruch 1, wobei die Produktionsrückstände und/oder Sekundärrohstoffen auswählt sind aus Kämmlingen, Grundbaumwolle, Kardenrückständen, Schlichtfasern, Reißfasern, Papierfasermaterial und/oder Spelzfasermaterial.

3. Verbundmaterial nach einem der Ansprüche 1 bis 2, wobei das Pflanzenfasermaterial Baumwollfasermaterial, Holzfasermaterial und/oder Pflanzenfasermaterial der Gattung der Poales umfasst.

4. Verbundmaterial, insbesondere nach einem der vorstehenden Ansprüche, umfassend ein Fasermaterial, das Pflanzenfasermaterial aufweist, und ein Bindemittel, wobei das Pflanzenfasermaterial Holzfasermaterial, insbesondere Zellstoff, Holzstoff und/oder Papierfasermaterial, aufweist.

5. Verbundmaterial, insbesondere nach einem der vorstehenden Ansprüche, umfassend ein Fasermaterial, das Pflanzenfasermaterial aufweist, und ein Bindemittel, wobei das Pflanzenfasermaterial Pflanzenfasermaterial der Ordnung der Poales, insbesondere der Gattung von Weizen, Dinkel, Roggen, Gerste, Hafer, Reis, Hirse, Mais oder Mischungen von zwei oder mehreren davon, umfasst.

6. Verbundmaterial, insbesondere nach einem der vorstehenden Ansprüche, umfassend ein Fasermaterial, das Pflanzenfasermaterial aufweist, und ein Bindemittel, wobei ein Hauptfaseranteil von wenigstens 40 Vol.-%, insbesondere von wenigstens 50 Vol.-%, 60 Vol.-% oder 65 Vol.-%, des Pflanzenfasermaterials in einem Faserlängenbereich zwischen 0,2 mm und 2 mm liegt.

7. Verbundmaterial, insbesondere nach einem der vorstehenden Ansprüche, umfassend ein Fasermaterial, das Pflanzenfasermaterial aufweist, und Bindemittel, wobei ein Kurzfaseranteil von wenigstens 5 Vol.-%, insbesondere von wenigstens 10 Vol.-%, 15 Vol.-% 20 Vol.-% oder 25 Vol.-%, des Pflanzenfasermaterials eine Faserlänge von weniger als 0,2 mm aufweist, insbesondere in einem Faserlängenbereich zwischen 0,02 mm und weniger als 0,2 mm liegt.

8. Verbundmaterial, insbesondere nach einem der vorstehenden Ansprüche, umfassend ein Fasermaterial, das Pflanzenfasermaterial aufweist, und Bindemittel, wobei ein Langfaseranteil von wenigstens 5 Vol.-%, insbesondere von wenigstens 6 Vol.-%, 7 Vol.-%, 8 Vol.-%, 9 Vol.-% oder 10 Vol.-%, des Pflanzenfasermaterials eine Faserlänge von mehr als 2 mm aufweist, insbesondere in einem Faserlängenbereich zwischen mehr als 2 mm und 5 mm liegt.

9. Verbundmaterial, insbesondere nach einem der vorstehenden Ansprüche, umfassend ein Fasermaterial, das Pflanzenfasermaterial aufweist, und ein Bindemittel, wobei das Pflanzenfasermaterial gefärbtes Fasermaterial aufweist.

10. Verbundmaterial, insbesondere nach einem der vorstehenden Ansprüche, umfassend ein Fasermaterial, das Pflanzenfasermaterial und ein Verstärkungsfasermaterial, insbesondere Lederfasermaterial, aufweist, und ein Bindemittel, wobei der Anteil des Verstärkungsfasermaterials wenigstens 5 Gew.-% und höchstens 50 Gew.-%, bezogen auf das Gesamtgewicht des Fasermaterial, beträgt.

11. Verbundmaterial, insbesondere nach einem der vorangehenden Ansprüche, umfassend ein Fasermaterial, das Pflanzenfasermaterial aufweist, und ein Bindemittel, wobei das Bindemittel einen biologisch abbaubaren Anteil von wenigstens 20 Gew.-%, bezogen auf das Gesamtgewicht des Bindemittels, aufweist.

12. Verbundmaterial nach einem der vorstehenden Ansprüche, wobei
der Anteil des Fasermaterials 20 bis 80 Gew.-%, vorzugsweise 25 bis 70 Gew.-%, besonders bevorzugt 30 bis 60 Gew.-% oder 30 bis 50 Gew.-%, bezogen auf das Gesamtgewicht des Verbundmaterials, beträgt, und/oder wobei
der Anteil des Bindemittels 5 bis 60 Gew.-%, vorzugsweise 10 bis 50 Gew.-%, besonders bevorzugt 20 bis 35 Gew.-%, bezogen auf das Gesamtgewicht des Verbundmaterials, beträgt.

13. Verbundmaterial nach einem der vorangehenden Ansprüche, wobei das Verbundmaterial ferner zumindest ein Additiv umfasst, vorzugsweise ausgewählt aus der Gruppe, bestehend aus einem anorganischen Salz, einem Farbmittel, einem Gleitmittel, einem Weichmacher, einem Flammschutzmittel, insbesondere einem halogen-, bor- und antimonfreien Flammschutzmittel, einem Fettungsmittel, einem Gerbstoff, einem Nachgerbstoff, einem Flockungsmittel, einem Fixiermittel, einem Entwässerungshilfsmittel, einem Nassfestmittel, einem Füllstoff und Mischungen von zwei oder mehr davon.

14. Verbundmaterial nach Anspruch 13, wobei das Additiv ein Fettungsmittel aufweist, das ausgewählt ist aus der Gruppe, bestehend aus einem oder mehreren Triglyceridestern mit langkettigen (> 10 Kohlenstoffatome) gesättigten und/oder einfach oder mehrfach ungesättigten Fettsäuren und/oder sulfatierten natürlichen Ölen.

15. Flächiges, insbesondere bahnförmiges, Erzeugnis, umfassend das Verbundmaterial nach einem der vorangehenden Ansprüche, insbesondere wobei das Erzeugnis auf eine Rolle gewickelt oder in Platten zugeschnitten ist.

16. Erzeugnis nach Anspruch 15, wobei das Verbundmaterial nach Anspruch 9 ausgebildet ist und das Erzeugnis von dem gefärbten Fasermaterial durchsetzt ist, insbesondere gleichmäßig durchsetzt ist.

17. Verwendung des Verbundmaterials nach einem der Ansprüche 1 bis 14 oder des Erzeugnisses nach einem der Ansprüche 15 bis 16, zur
- Beschichtung, insbesondere Ummantelung oder Kaschierung, insbesondere von
- Paneelen, wie Wandpaneelen, Bodenpaneelen, Deckenpaneelen oder Fensterrahmenpaneelen, insbesondere im Bereich von Fahrzeuginnenräumen, Wohnräumen und Gewerberäumen, oder von
- Einrichtungs- und Gebrauchsgegenständen, wie Möbeln, Dekorationen, Elektrogeräten und Handtaschen, insbesondere in der Modeindustrie, und/oder
- zur Herstellung von
- Belägen, wie Wandbelägen, insbesondere Tapeten, Bodenbelägen, Deckenbelägen, Fensterbelägen oder Türseitenverkleidungen insbesondere im Bereich von Fahrzeuginnenräumen, Wohnräumen und Gewerberäumen, von
- Wandelementen, wie Raumtrennern, insbesondere im Bereich von Fahrzeuginnenräumen, Wohnräumen und Gewerberäumen, von
- Überzugsmaterial, wie Kissenbezüge, Sitzbezüge oder Abdeckungen, insbesondere von Sitzrückenschalen, insbesondere im Fahrzeuginnenbereich, von
- Schuhkomponenten, insbesondere Hinterkappen, Absätzen, Lauf- und Brandsohlen, und/oder von
- Modeaccessoires, Produkte zur Ausstattung von Verkehrsmitteln oder Bauprodukten.

18. Verfahren zum Herstellen eines nach einem der Ansprüche 1 bis 14 ausgebildeten Verbundmaterials oder eines nach einem der Ansprüche 15 bis 16 ausgebildeten flächigen Erzeugnis, umfassend die Schritte:
a) Bereitstellen eines Fasermaterials, das Pflanzenfasermaterial umfasst;
b) Bereitstellen eines Bindemittels;
c) Vermengen des Bindemittels, des Fasermaterials und eines Fluids, insbesondere Wasser, zu einem Gemisch, insbesondere Faserbrei; und
d) Trocknen des Gemischs, um das Verbundmetarial zu erhalten.

19. Verfahren, insbesondere nach Anspruch 18, zum Herstellen eines Verbundmaterials oder eines flächigen Erzeugnisses, umfassend die Schritte:
a) Bereitstellen eines Fasermaterials, das Pflanzenfasermaterial umfasst;
b) Bereitstellen eines Bindemittels;
c) Vermischen des Bindemittels, des Fasermaterials und eines Fluids, insbesondere Wasser, zu einem Gemisch, insbesondere Faserbrei; und
d) Trocknen des Gemisches, um das Verbundmetarial zu erhalten;
wobei Schritt a) das Bereitstellen von Pflanzenfasermaterial in Form von Produktionsrückständen und/oder Sekundärrohstoffen umfasst.

20. Verfahren nach einem der Ansprüche 18 bis 19,
wobei Schritt d) umfasst
d1) Überführung des Gemisches in einen flächige, insbesondere bahnförmigen, Zustand, und
d2) Trocknen des Gemisches, um ein wickelbares und/oder stapelbares Erzeugnis zu erhalten,
und/oder wobei das Verfahren ferner einen oder mehrere der folgenden Schritte umfasst:
e) Auftragen einer Beschichtung, insbesondere Farbschicht und/oder Schutzschicht, insbesondere umfassend Polyurethan oder Polyacrylat, auf wenigstens eine Oberfläche des Erzeugnisses; und/oder
f) Prägen von wenigstens einer Oberfläche des Erzeugnisses; und/oder
g) Bearbeiten des Erzeugnisses mit einer Stollmaschine.
